# EUROPEAN PATENT APPLICATION

(11) **EP 4 836 567 A1**
(43) Date of publication of application: **04.11.2026**
(21) Application number: 23962907.4
(22) Date of filing: 29.12.2023
(51) Int. Cl.: H04W 72/21

(54) **RESOURCE CONFIGURATION METHOD, COMMUNICATION DEVICE AND STORAGE MEDIUM**

(71) Applicant: Beijing Xiaomi Mobile Software Co., Ltd., Beijing 100085 (CN)
(72) Inventor: ZHANG, Juan, Beijing 100085 (CN)
(74) Representative: Gunzelmann, Rainer
(86) International application number: PCT/CN2023/143588
(87) International publication number: WO 2025/138233

(57) **Abstract**

Embodiments of the present disclosure provide a resource configuration method, a communication device, and a storage medium. The resource configuration method comprises: sending a first configuration of a first resource to a second network device, wherein the first configuration of the first resource is at least used for the second network device to control transmission in a second cell, and the first resource is used for a first terminal in a first cell of a first network device to perform continuous wave (CW) transmission and/or backscatter (BS) reception on a second terminal.

## Description

### FIELD

The present disclosure relates to the field of communication technologies, and in particular, to a resource configuration method, a communication device and a storage medium.

### BACKGROUND

Traditional Internet of Things (IoT) devices are generally driven by conventional batteries with limited lifespan. When the battery is depleted, the IoT device may no longer be used, or the battery needs to be replaced, or even a new device needs to be replaced. In some extreme environmental conditions, maintaining the operation of the IoT network and replacing batteries may be very challenging. For example, for an IoT device buried underground, it is very troublesome to replace the battery or replace the device when the battery is depleted.

In view of this, an IoT device that communicates using ambient energy is proposed. Such an IoT device may be battery-free or have limited energy storage capability (e.g., using a capacitor), and powered by harvesting energy from radio waves, light, motion, heat, energy provided by wireless signals transmitted from other devices, or any other suitable power source.

### SUMMARY

Embodiments of the present disclosure provide a resource configuration method, a communication device and a storage medium.

According to a first aspect of embodiments of the present disclosure, there is provided a resource configuration method, performed by a terminal, the method including: sending a first configuration for a first resource to a second network device, in which the first configuration for the first resource is at least used for the second network device to control transmission of a second cell, the first resource is used for a first terminal in a first cell of the first network device to perform continuous wave (CW) transmission to and/or backscatter (BS) reception from a second terminal.

According to a second aspect of embodiments of the present disclosure, there is provided a resource configuration method, performed by a network device, the method including: receiving a first configuration for a first resource sent by a first network device, in which the first resource is used for a first terminal to perform CW transmission to and/or BS reception from a second terminal; and controlling transmission of a second cell of the second network device according to the first configuration.

According to a third aspect of embodiments of the present disclosure, there is provided a resource configuration method, in which a first terminal is located in a first cell, the first terminal includes:
a processing module configured to obtain a first measurement result by performing cell measurement according to a first configuration, in which a first resource indicated by the first configuration is used for the first terminal to perform CW transmission to and/or BS reception from a second terminal; and
a sending module configured to send the first measurement result to a first network device of the first cell, in which the first measurement result indicates at least one of a location of the first terminal, a beam direction of the first terminal, or interference of a second cell suffered by the first terminal; and the first measurement result is used for a second network device to control transmission of the second cell according to the first configuration.

According to a fourth aspect of embodiments of the present disclosure, there is provided a resource configuration method, performed by a fourth terminal, the method including: obtaining a second measurement result by performing cell measurement; and sending the second measurement result to a second network device of a second cell, in which the second measurement result is used for the second network device to control transmission of the second cell according to a first configuration, the first configuration is a configuration for a first resource sent by a first network device to the second network device, and the first resource is used for a first terminal in a first cell of the first network device to perform CW transmission to and/or BS reception from a second terminal.

According to a fifth aspect of embodiments of the present disclosure, there is provided a first network device, including: a sending module configured to send a first configuration for a first resource to a second network device, in which the first configuration for the first resource is at least used for the second network device to control transmission of a second cell, and the first resource is used for a first terminal in a first cell of the first network device to perform CW transmission to and/or BS reception from a second terminal.

According to a sixth aspect of embodiments of the present disclosure, there is provided a second network device, including: a receiving module configured to receive a first configuration for a first resource sent by a first network device, in which the first resource is used for a first terminal in a first cell of the first network device to perform CW transmission to and/or BS reception from a second terminal; and a processing module configured to control transmission of a second cell of the second network device according to the first configuration.

According to a seventh aspect of embodiments of the present disclosure, there is provided a first terminal, the first terminal being located in a first cell, the first terminal including: a processing module configured to obtain a first measurement result by performing cell measurement according to a first configuration, in which a first resource indicated by the first configuration is used for the first terminal to perform CW transmission to and/or BS reception from a second terminal; and a sending module configured to send the first measurement result to a first network device of the first cell, in which the first measurement result indicates at least one of a location of the first terminal, a beam direction of the first terminal, or interference of a second cell suffered by the first terminal, and the first measurement result is used for a second network device to control transmission of the second cell according to the first configuration.

According to an eighth aspect of embodiments of the present disclosure, there is provided a fourth terminal, the fourth terminal being located in a second cell, the fourth terminal including: a processing module configured to obtaining a second measurement result by performing cell measurement; and a sending module configured to send the second measurement result to a second network device of the second cell, in which the second measurement result is used for the second network device to control transmission of the second cell according to a first configuration, the first configuration is a configuration for a first resource sent by a first network device to the second network device, and the first resource is used for a first terminal in a first cell of the first network device to perform CW transmission to and/or BS reception from a second terminal.

According to a ninth aspect of embodiments of the present disclosure, there is provided a communication device, in which the communication device includes: one or more processors; in which the one or more processors are configured to invoke instructions to cause the communication device to perform the method provided by any one of the technical solutions of the first aspect to the fourth aspect.

According to a tenth aspect of embodiments of the present disclosure, there is provided a storage medium, in which the storage medium stores instructions, and when the instructions are executed on a communication device, the communication device is caused to perform the method provided by any one of the first aspect to the fourth aspect.

In the technical solutions provided by embodiments of the present disclosure, the first network device of the first cell and the second network device of the second cell exchange the first configuration with each other. In this way, it is convenient for the second network device to perform transmission scheduling and/or configuration of the Uu interface of the second cell, reducing interference from the Uu interface of the second cell to the CW transmission and/or BS reception of the first terminal.

It should be understood that the above general description and the following detailed description are only illustrative and explanatory, and do not limit embodiments of the present disclosure.

### BRIEF DESCRIPTION OF THE DRAWINGS

The accompanying drawings, which are incorporated in and constitute a part of this specification, illustrate embodiments consistent with the present disclosure and together with the description serve to explain the principles of embodiments of the present disclosure.
FIG. 1A is a schematic diagram of an architecture of a communication system according to an illustrative embodiment.
FIG. 1B is a schematic diagram of wireless communication based on a backscatter transmission mechanism according to an illustrative embodiment.
FIG. 1C is a schematic topology diagram of wireless communication based on a backscatter transmission mechanism according to an illustrative embodiment.
FIG. 1D is a schematic diagram of wireless communication based on a backscatter transmission mechanism according to an illustrative embodiment.
FIG. 1E is a schematic topology diagram of wireless communication based on a backscatter transmission mechanism according to an illustrative embodiment.
FIG. 1F is a schematic topology diagram of wireless communication based on a backscatter transmission mechanism according to an illustrative embodiment.
FIG. 1G is a schematic topology diagram of wireless communication based on a backscatter transmission mechanism according to an illustrative embodiment.
FIG. 1H is a schematic diagram of three types of devices for wireless communication based on a backscatter transmission mechanism according to an illustrative embodiment.
FIG. 2A is a schematic flowchart of a resource configuration method according to an illustrative embodiment.
FIG. 2B is a schematic flowchart of a resource configuration method according to an illustrative embodiment.
FIG. 3 is a schematic flowchart of a resource configuration method according to an illustrative embodiment.
FIG. 4 is a schematic flowchart of a resource configuration method according to an illustrative embodiment.
FIG. 5 is a schematic flowchart of a resource configuration method according to an illustrative embodiment.
FIG. 6 is a schematic flowchart of a resource configuration method according to an illustrative embodiment.
FIG. 7 is a schematic flowchart of a resource configuration method according to an illustrative embodiment.
FIG. 8A is a schematic diagram of neighboring cell interference according to an illustrative embodiment.
FIG. 8B is a schematic diagram of neighboring cell interference according to an illustrative embodiment.
FIG. 9A is a schematic block diagram of a first network device according to an illustrative embodiment.
FIG. 9B is a schematic block diagram of a second network device according to an illustrative embodiment.
FIG. 9C is a schematic block diagram of a first terminal according to an illustrative embodiment.
FIG. 9D is a schematic block diagram of a fourth terminal according to an illustrative embodiment.
FIG. 10A is a schematic block diagram of a communication device according to an illustrative embodiment.
FIG. 10B is a schematic block diagram of a chip according to an illustrative embodiment.

### DETAILED DESCRIPTION

Embodiments of the present disclosure provide a resource configuration method, a communication device, a communication system, and a storage medium.

A first aspect provides a resource configuration method, performed by a first network device, the method includes:

sending a first configuration for a first resource to a second network device, in which the first configuration for the first resource is at least used for the second network device to control transmission of a second cell, and the first resource is used for a first terminal in a first cell of the first network device to perform continuous wave (CW) transmission to and/or backscatter (BS) reception from a second terminal.

Based on the above solutions, the first network device of the first cell and the second network device of the second cell exchange the first configuration with each other. In this way, it is convenient for the second network device to control transmission of the second cell, reducing interference from the Uu interface of the second cell to the CW transmission and/or BS reception of the first terminal.

In some embodiments of the first aspect, the method further includes:
receiving a first measurement result sent by the first terminal, in which the first measurement result indicates at least one of a location of the first terminal, a beam direction of the first terminal, or interference of the second cell suffered by the first terminal; and
sending indication information to the second network device according to the first measurement result, in which the indication information is at least used for the second network device to determine a third terminal not performing first transmission on the first resource, the third terminal camps on the second cell, the first transmission includes at least one of: Uu interface transmission, CW transmission, or BS reception; and/or the indication information is used for the second network device to determine whether to activate controlling, according to the first configuration, the transmission of the second cell.

Based on the above solution, the first terminal performs measurement related to interference to its own CW transmission and/or BS reception. For example, the above measurement is performed on a third resource to obtain the first measurement result, and the third resource may include the first resource. For example, in the time domain, the third resource may have a duration equal to or greater than a duration of the first resource. For another example, in the frequency domain, a bandwidth of the third resource may be greater than or equal to a bandwidth of the first resource. This facilitates the first network device to send the first configuration to the second network device when determining that the transmission of the second cell may interfere with the CW transmission and/or BS reception of the first terminal, reducing unnecessary sending of the first configuration.

Based on the above solution, sending the first configuration for the first resource to the second network device includes:
before sending the first configuration for the first resource to the second network device, sending the first configuration for the first resource to the second network device according to the first measurement result.

Based on the above solution, the first terminal performs measurement related to interference to its own CW transmission and/or BS reception. For example, the above measurement is performed on a third resource to obtain the first measurement result, and the third resource may include the first resource. For example, in the time domain, the third resource may have a duration equal to or greater than a duration of the first resource. For another example, in the frequency domain, a bandwidth of the third resource may be greater than or equal to a bandwidth of the first resource. This facilitates the first network device to send the first configuration to the second network device when determining that the transmission of the second cell may interfere with the CW transmission and/or BS reception of the first terminal, reducing unnecessary sending of the first configuration.

In some embodiments of the first aspect, sending the first configuration for the first resource to the second network device according to the first measurement result includes at least one of:
sending the first configuration to the second network device in a case where the first measurement result indicates that the first terminal is located at an edge region of the first cell;
sending the first configuration to the second network device in a case where the first measurement result indicates that a beam direction used by the first terminal is pointed toward the second cell; or
sending the first configuration to the second network device in a case where the first measurement result indicates that the first terminal suffers interference from the second cell.

Based on the above solution, when the first terminal is at the edge of the first cell or the beam of the first terminal is pointed toward the second cell, it indicates that the CW transmission and/or BS reception of the first terminal may be interfered by the transmission of the neighboring cell. Therefore, the second configuration is sent to the second network device to facilitate Uu interface transmission scheduling and/or configuration of the second network device. When the neighboring cell interference of the first terminal is relatively large, the second configuration is sent to the second network device to facilitate the second network device to reduce interference to the CW transmission and/or BS reception of the first terminal through Uu interface transmission scheduling and/or configuration.

In some embodiments of the first aspect, the indication information includes: first information; and the first information indicates at least one of the location of the first terminal, the beam direction of the first terminal, or the interference of the second cell suffered by the first terminal.

Based on the above solution, the sending of the first information may be used for the second network device to determine in which areas of the second cell, which beams, and which terminals do not perform Uu interface transmission, reducing interference to the CW transmission and/or BS reception of the first terminal.

In some embodiments of the first aspect, the method further includes: in a case where the first measurement result is received after sending the first configuration for the first resource to the second network device, the indication information includes second information, and the second information at least indicates whether the second network device activates controlling, according to the first configuration, the transmission of the second cell.

Based on the above solution, the first network device may send the first configuration to the second network device after completing the first configuration. In this way, the second network device may perform interference avoidance for the CW transmission and/or BS reception of the first terminal in advance.

In some embodiments of the first aspect, the second information includes at least one of:
a first instruction at least indicating whether the second network device activates controlling, according to the first configuration, the transmission of the second cell; or
third information indicating at least one of the location of the first terminal, the beam direction of the first terminal, or the interference of the second cell suffered by the first terminal.

Based on the above solution, the sending of the third information may be used for the second network device to determine in which areas of the second cell, which beams, and which terminals do not perform Uu interface transmission, reducing interference to the CW transmission and/or BS reception of the first terminal.

In some embodiments of the first aspect, the first configuration includes:
time domain information indicating a time location of the first resource;
reference timing information indicating a reference timing of the first resource;
frequency domain information indicating a frequency location of the first resource;
cell information indicating a cell corresponding to the first resource; or
validity period information indicating a validity period of the first resource.

In some embodiments of the first aspect, the time domain information includes at least one of:
period information indicating a period of the first resource;
an offset indicating a time offset of a time domain start position of an initial first resource relative to a reception time of configuration information; or
duration information indicating a duration of one first resource.

In some embodiments of the first aspect, the frequency domain information includes at least one of:
bandwidth part (BWP) information indicating a BWP in which the first resource is located;
frequency band information indicating a frequency band in which the first resource is located;
frequency layer information indicating a frequency layer in which the first resource is located; or
carrier information indicating a carrier on which the first resource is located.

In some embodiments of the first aspect, the cell in which the first resource is located includes at least one of:
a primary cell;
a primary secondary cell;
a special cell, the special cell including a primary cell and a primary secondary cell; or
a secondary cell different from the primary secondary cell.

In some embodiments of the first aspect, the reference timing information includes at least one of:
first timing information indicating that the reference timing is a timing of the first cell associated with the first network device;
second timing information indicating that the reference timing is a timing of the second cell associated with the second network device; or
third timing information indicating a timing offset between the first cell and the second cell.

A second aspect provides a resource configuration method, performed by a second network device, the method includes:
receiving a first configuration for a first resource sent by a first network device, in which the first resource is used for a first terminal in a first cell of the first network device to perform continuous wave (CW) transmission to and/or backscatter (BS) reception from a second terminal; and
controlling transmission of a second cell of the second network device according to the first configuration.

Based on the above solution, the first network device of the first cell and the second network device of the second cell exchange the first configuration with each other. In this way, it is convenient for the second network device to perform transmission scheduling and/or configuration of the Uu interface of the second cell, reducing interference from the Uu interface of the second cell to the CW transmission and/or BS reception of the first terminal.

In some embodiments of the second aspect, controlling the transmission of the second cell of the second network device according to the first configuration includes:
determining a third terminal that interferes with the CW transmission and/or BS reception of the first terminal; and
controlling transmission of the third terminal according to the first configuration.

In some embodiments of the second aspect, controlling the transmission of the third terminal according to the first configuration includes one of:
sending a second configuration to the third terminal according to the first configuration, in which the second configuration is a configuration of a second resource, the third terminal stops at least one of: Uu interface transmission, CW transmission, or BS reception on the second resource, the second resource is determined according to the first resource, and the second resource and the first resource have different reference timings; or
sending the first configuration to the third terminal, in which the first configuration is used for the third terminal not to perform Uu interface transmission on the first resource.

In some embodiments of the second aspect, controlling the transmission of the third terminal according to the first configuration includes at least one of:
controlling, according to the first configuration, the third terminal not to perform first transmission on the first resource; or
controlling, according to the first configuration, the third terminal not to perform first transmission on the first resource and a guard interval, in which the guard interval includes a frequency domain interval and/or a time domain interval; and
the first transmission includes at least one of: Uu interface transmission, CW transmission, or BS reception.

In some embodiments of the second aspect, the method further includes:
receiving indication information sent by the first network device, in which the indication information is sent by the first network device according to a first measurement result of the first terminal, and is at least used for the second network device to determine a third terminal not performing first transmission on the first resource, the third terminal camps on the second cell, and the first transmission includes at least one of: Uu interface transmission, CW transmission, or BS reception; and/or the indication information is used for the second network device to determine whether to activate controlling, according to the first configuration, the transmission of the second cell.

Based on the above solution, by receiving the indication information, the third terminal that may interfere with the CW transmission and/or BS reception of the first terminal may be determined, so that the third terminal is controlled to stop transmission at the corresponding position of the first resource. This may improve the effective utilization of resources in the second cell.

In some embodiments of the second aspect, the indication information includes:
first information; and the first information indicates at least one of a location of the first terminal, a beam direction of the first terminal, or interference of the second cell suffered by the first terminal.

The indication information includes: second information;
the second information includes at least one of:
a first instruction at least indicating whether the second network device activates controlling, according to the first configuration, the transmission of the second cell; or
third information indicating at least one of the location of the first terminal, the beam direction of the first terminal, or interference of the second cell suffered by the first terminal.

In some embodiments of the second aspect, the method further includes:
receiving a second measurement result of a fourth terminal, in which the second measurement result indicates at least one of a location of the fourth terminal, a beam direction of the fourth terminal, or interference of the first cell suffered by the fourth terminal; and
determining the third terminal from the fourth terminal according to the second measurement result.

In some embodiments of the second aspect, the third terminal includes at least one of:
a terminal located at an edge region of the second cell; the second cell being associated with the second network device;
a terminal having a beam direction pointed toward the first terminal; or
a terminal having neighboring cell interference greater than a first threshold.

In some embodiments of the second aspect, controlling the transmission of the second cell of the second network device according to the first configuration includes: in a case where the reference timing of the first configuration is a timing of the first network device, determining, according to the first configuration, time domain information of the first resource when the first resource uses a timing of the second network device.

A third aspect provides a resource configuration method, performed by a first terminal, the first terminal being located in a first cell, the method includes:
obtaining a first measurement result by performing cell measurement according to a first configuration, in which a first resource indicated by the first configuration is used for the first terminal to perform continuous wave (CW) transmission to and/or backscatter (BS) reception from a second terminal; and
sending the first measurement result to a first network device of the first cell, in which the first measurement result indicates at least one of a location of the first terminal, a beam direction of the first terminal, or interference of a second cell suffered by the first terminal, and the first measurement result is used for a second network device to control transmission of the second cell according to the first configuration.

In some embodiments of the third aspect, obtaining the first measurement result by performing cell measurement includes at least one of:
obtaining the first measurement result by performing measurement of the first cell; or
obtaining the first measurement result by performing measurement of the second cell; and
the first cell being associated with the first network device; the second cell being associated with the second network device.

In some embodiments of the third aspect, sending the first measurement result to the first network device includes:
determining whether a first event is triggered; and
sending the first measurement result triggered to the first network device.

In some embodiments of the third aspect, determining whether the first event is triggered includes at least one of:
the first measurement result indicating that the first terminal is located at an edge region of the first cell;
the first measurement result indicating that the beam direction of the first terminal is pointed toward the second cell;
the first measurement result indicating that a measurement value of the first cell is less than or equal to a second threshold; or
the first measurement result indicating that neighboring cell interference of the second cell is greater than or equal to a third threshold.

A fourth aspect provides a resource configuration method, performed by a fourth terminal, the fourth terminal being located in a second cell, the method including:
obtaining a second measurement result by performing cell measurement; and
sending the second measurement result to a second network device of the second cell, in which the second measurement result is used for the second network device to control transmission of the second cell according to a first configuration, the first configuration is a configuration for a first resource sent by a first network device to the second network device, and the first resource is used for a first terminal in a first cell of the first network device to perform continuous wave (CW) transmission to and/or backscatter (BS) reception from a second terminal.

In some embodiments of the fourth aspect, obtaining the second measurement result by performing cell measurement includes:
obtaining the second measurement result by performing measurement of the first cell and/or the second cell; the first cell being associated with the first network device; the second cell being associated with the second network device.

In some embodiments of the fourth aspect, sending the second measurement result to the second network device includes:
determining whether a second event is triggered; and
sending the second measurement result triggered to the second network device.

In some embodiments of the fourth aspect, determining whether the second event is triggered includes at least one of:
the second measurement result indicating that the fourth terminal is located at an edge region of the second cell;
the second measurement result indicating that a beam direction of the fourth terminal is pointed toward the first cell;
the second measurement result indicating that a measurement value of the second cell is less than or equal to a third threshold; or
the second measurement result indicating that neighboring cell interference of the first cell is greater than or equal to a fourth threshold.

In some embodiments of the fourth aspect, the method further includes:
receiving the first configuration sent by the second network device; and
determining, according to the first configuration, not to perform first transmission on the first resource, in which the first transmission includes at least one of: Uu interface transmission, CW transmission, or BS reception.

In some embodiments of the fourth aspect, the method further includes:
receiving a second configuration sent by the second network device, in which the second configuration is a configuration of a second resource, the second resource corresponds to the first resource, and the second resource and the first resource have different reference timings; and
determining, according to the second configuration, not to perform first transmission on the second resource, in which the first transmission includes at least one of: Uu interface transmission, CW transmission, or BS reception.

A fifth aspect provides a first network device, including:
a sending module configured to send a first configuration for a first resource to a second network device, in which the first configuration for the first resource is at least used for the second network device to control transmission of a second cell, and the first resource is used for a first terminal in a first cell of the first network device to perform continuous wave (CW) transmission to and/or backscatter (BS) reception from a second terminal.

A sixth aspect provides a second network device, including:
a receiving module configured to receive a first configuration for a first resource sent by a first network device, in which the first resource is used for a first terminal in a first cell of the first network device to perform continuous wave (CW) transmission to and/or backscatter (BS) reception from a second terminal; and
a processing module configured to control transmission of a second cell of the second network device according to the first configuration.

A seventh aspect provides a first terminal, including:
a processing module configured to obtain a first measurement result by performing cell measurement according to a first configuration, in which a first resource indicated by the first configuration is used for the first terminal to perform continuous wave (CW) transmission to and/or backscatter (BS) reception from a second terminal; and
a sending module configured to send the first measurement result to a first network device of the first cell, in which the first measurement result indicates at least one of a location of the first terminal, a beam direction of the first terminal, or interference of a second cell suffered by the first terminal, and the first measurement result is used for a second network device to control transmission of the second cell according to the first configuration.

An eighth aspect provides a fourth terminal, including:
a processing module configured to obtain a second measurement result by performing cell measurement; and
a sending module configured to send the second measurement result to a second network device of the second cell, in which the second measurement result is used for the second network device to control transmission of the second cell according to a first configuration, the first configuration is a configuration for a first resource sent by a first network device to the second network device, and the first resource is used for a first terminal in a first cell of the first network device to perform continuous wave (CW) transmission to and/or backscatter (BS) reception from a second terminal.

A ninth aspect provides a communication device, the communication device including: one or more processors; in which the one or more processors are configured to invoke instructions to cause the communication device to perform the resource configuration method described in any of optional implementations of the first to fourth aspects.

In a tenth aspect, embodiments of the present disclosure provide a storage medium, in which the storage medium stores instructions, and when the instructions are executed on a communication device, the communication device is caused to perform the resource configuration method described in any of optional implementations of the first to fourth aspects.

In an eleventh aspect, embodiments of the present disclosure provide a program product, when the program product is executed by a communication device, the communication device is caused to perform the resource configuration method described in any of optional implementations of the first to fourth aspects.

In a twelfth aspect, embodiments of the present disclosure provide a computer program, when the computer program is executed on a computer, the computer is caused to perform the resource configuration method described in any of optional implementations of the first to fourth aspects.

It should be understood that the above terminal, network device, communication system, program product, and computer program are all used to perform the methods provided in embodiments of the present disclosure. Therefore, for the beneficial effects that may be achieved, reference may be made to the beneficial effects in the corresponding methods, which are not repeated here.

Embodiments of the present disclosure propose a resource configuration method, a communication device, a communication system, and a storage medium. Embodiments of the present disclosure are not exhaustive, but are only illustrative of some embodiments, and do not serve as a specific limitation on the protection scope of the present disclosure. Without contradiction, each step in a certain embodiment may be implemented as an independent embodiment, and the steps may be combined arbitrarily. For example, a solution after removing some steps in a certain embodiment may also be implemented as an independent embodiment, and the order of steps in a certain embodiment may be exchanged arbitrarily. In addition, optional implementations in a certain embodiment may be combined arbitrarily. Furthermore, the embodiments may be combined arbitrarily. For example, part or all of the steps of different embodiments may be combined arbitrarily, and a certain embodiment may be arbitrarily combined with optional implementations of other embodiments.

In embodiments of the present disclosure, unless otherwise specified and there is a logical conflict, terms and/or descriptions between the embodiments are consistent and may be referenced to each other, and technical features in different embodiments may be combined according to their inherent logical relationships to form new embodiments.

Terms used in embodiments of the present disclosure are only for the purpose of describing specific embodiments, and are not intended to limit the present disclosure.

In embodiments of the present disclosure, unless otherwise specified, elements expressed in the singular form, such as "a", "an", "the", "said", "above", "aforementioned", "this one", etc., may mean "one and only one" or "one or more", "at least one", etc. For example, when using articles such as "a", "an", "the" in translation, the noun after the article may be understood as a singular expression or a plural expression.

In embodiments of the present disclosure, "multiple" refers to two or more.

In some embodiments, terms such as "at least one of", "one or more", "a plurality of", "multiple" may be interchangeable.

In some embodiments, expressions such as "at least one of A and B", "A and/or B", "in one case A, in another case B", "in one case A, in another case B", etc., may include the following technical solutions according to the situation: in some embodiments A (A is performed regardless of B); in some embodiments B (B is performed regardless of A); in some embodiments selecting and executing from A and B (A and B are selectively executed); in some embodiments A and B (both A and B are executed). The same applies when there are more branches such as A, B, C.

In some embodiments, expressions such as "A or B", etc., may include the following technical solutions according to the situation: in some embodiments A (A is performed regardless of B); in some embodiments B (B is performed regardless of A); in some embodiments selecting and executing from A and B (A and B are selectively executed). The same applies when there are more branches such as A, B, C.

Prefix words such as "first", "second" in embodiments of the present disclosure are only used to distinguish different description objects, and do not limit the position, order, priority, quantity, or content of the description objects. The description of the description objects refers to the claims or the description in the context of the embodiments, and should not be considered as an unnecessary limitation due to the use of prefix words. For example, if the description object is "field", the ordinal numbers before "field" in "first field" and "second field" do not limit the position or order between the "fields", and "first" and "second" do not limit whether the "fields" they modify are in the same message, nor do they limit the order of the "first field" and "second field". For another example, if the description object is "level", the ordinal numbers before "level" in "first level" and "second level" do not limit the priority between "levels". For another example, the number of description objects is not limited by the ordinal numbers, and may be one or more. For example, in "first device", the number of "devices" may be one or more. In addition, the objects modified by different prefix words may be the same or different. For example, if the description object is "device", the "first device" and the "second device" may be the same device or different devices, and their types may be the same or different. For another example, if the description object is "information", the "first type of information" and the "second type of information" may be the same information or different information, and their content may be the same or different.

In some embodiments, "include A", "contain A", "indicating A", "carry A" may be interpreted as directly carrying A, or as indirectly indicating A.

In some embodiments, terms such as "determine", "in a case where", "when", "in case of", "if" may be interchangeable.

In some embodiments, terms such as "greater than", "greater than or equal to", "not less than", "more than", "more than or equal to", "not less than", "higher than", "higher than or equal to", "not lower than", "above" may be interchangeable, and terms such as "smaller than", "smaller than or equal to", "not greater than", "less than", "less than or equal to", "not more than", "lower than", "lower than or equal to", "not higher than", "below" may be interchangeable.

In some embodiments, devices, etc. may be interpreted as physical or virtual, and their names are not limited to those recorded in the embodiments. Terms such as "apparatus", "equipment", "device", "circuit", "network element", "node", "function", "unit", "section", "system", "network", "chip", "chip system", "entity", "subject" may be interchangeable.

In some embodiments, "network" may be interpreted as devices included in the network (e.g., access network device, core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be interchangeable.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be interchangeable.

In some embodiments, an access network device, a core network device, or a network device may be replaced by a terminal. For example, embodiments of the present disclosure may also be applied to a structure in which communication between an access network device, a core network device, or a network device and a terminal is replaced by communication between multiple terminals (e.g., device-to-device (D2D), vehicle-to-everything (V2X), etc.). In this case, the terminal may also be configured to have all or part of the functions of the access network device. In addition, terms such as "uplink", "downlink" may also be replaced by terms corresponding to communication between terminals (e.g., "side"). For example, uplink channels, downlink channels, etc. may be replaced by sidelink channels, and uplink links, downlink links, etc. may be replaced by sidelink links.

In some embodiments, a terminal may be replaced by an access network device, a core network device, or a network device. In this case, the access network device, the core network device, or the network device may also be configured to have all or part of the functions of the terminal.

In some embodiments, obtaining data, information, etc. shall comply with the laws and regulations of the country where it is located.

In some embodiments, data, information, etc. may be obtained after obtaining user consent.

In addition, each element, each row, or each column in the tables of embodiments of the present disclosure may be implemented as an independent embodiment, and any combination of elements, rows, or columns may also be implemented as an independent embodiment.

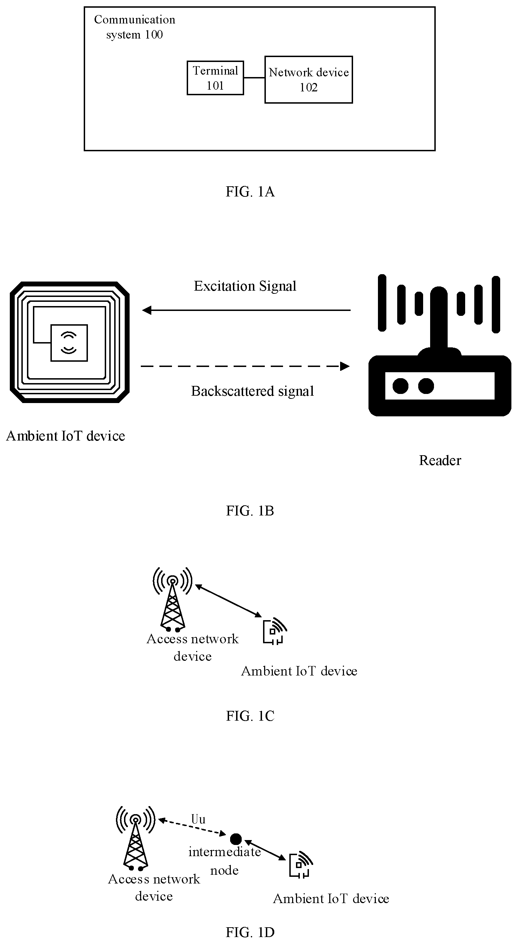

FIG. 1A is a schematic diagram of an architecture of a communication system according to an embodiment of the present disclosure.

As shown in FIG. 1A, a communication system 100 includes a terminal 101 and a network device 102. The network device 102 may include an access network device and/or a core network device.

In some embodiments, the terminal 101 includes at least one of, for example, a mobile phone, a wearable device, an Internet of Things device, a car with communication functions, a smart car, a tablet computer (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, but is not limited to this.

In some embodiments, the terminal is also called user equipment (UE).

In some embodiments, the access network device may be, for example, a node or device that accesses the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a Wi-Fi system, but is not limited to this.

In some embodiments, the technical solutions of the present disclosure may be applicable to an Open RAN architecture. In this case, the interfaces between or within access network devices involved in embodiments of the present disclosure may become internal interfaces of Open RAN, and the procedures and information exchange between these internal interfaces may be implemented through software or programs.

In some embodiments, the access network device may be composed of a central unit (CU) and a distributed unit (DU). The CU may also be called a control unit. Using a CU-DU structure, the protocol layers of the access network device may be split, the functions of some protocol layers may be placed in the CU for centralized control, and the functions of the remaining part or all of the protocol layers may be distributed in the DU, which is centrally controlled by the CU, but is not limited to this.

In some embodiments, the core network device may be a single device, including a first network element, etc., or may be multiple devices or groups of devices, each including a first network element. The network elements may be virtual or physical. The core network includes, for example, at least one of an Evolved Packet Core (EPC), a 5G Core Network (5GCN), or a Next Generation Core (NGC).

It should be understood that the communication system described in embodiments of the present disclosure is intended to illustrate the technical solutions of embodiments of the present disclosure more clearly, and does not constitute a limitation on the technical solutions provided by embodiments of the present disclosure. Those of ordinary skill in the art will appreciate that with the evolution of system architecture and the emergence of new business scenarios, the technical solutions provided by embodiments of the present disclosure are equally applicable to similar technical problems.

The following embodiments of the present disclosure may be applied to the communication system 100 shown in FIG. 1A, or part of the entities, but are not limited to this. The entities shown in FIG. 1A are examples. The communication system may include all or part of the entities in FIG. 1A, or may include other entities besides FIG. 1A. The number and form of the entities are arbitrary, and the connection relationships between the entities are examples. The entities may not be connected or may be connected, and the connection may be in any manner, either direct connection or indirect connection, wired connection or wireless connection.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), a system using other resource configuration methods, a next-generation system extended based on them, etc. In addition, multiple systems may be combined (e.g., a combination of LTE and NR).

In some cases, IoT devices are generally driven by conventional batteries with limited lifespan, which negatively impacts user experience. The number of IoT devices will gradually increase astronomically. Coupled with the emergence of a large number of IoT devices, maintenance expenses including labor and battery costs are pushed to an entirely new level. Billions of conventional batteries are discarded each year, with only a small fraction being effectively recycled, which has a detrimental impact on the Earth's ecosystem. In some extreme environmental conditions, maintaining the operation of the IoT network and replacing batteries may be very challenging. In this regard, battery-less IoT communication is proposed, which may enhance network performance and sustainability and expand application scenarios. Furthermore, battery-less communication is more environmentally friendly and safer for children and the elderly. By removing conventional batteries, device size and cost may be significantly reduced, paving the way for various new applications.

In some embodiments, various Low Power Wide Area (LPWA) technologies, such as Machine Type Communication (MTC), Narrow Band Internet of Things (NB-IoT), Reduced Capability (RedCap), etc., have been developed to meet the growing demands in the vertical domain. These LPWA technologies achieve low cost, low power consumption, and large-scale connectivity, and may meet the requirements of many applications. However, there are still many use cases and applications that cannot be solved in the following situations. First, battery-powered devices are not suitable, for example, under extreme environmental conditions (such as high pressure, extremely high/low temperature, humid environments). Second, maintenance-free devices (e.g., without the need to replace conventional batteries) are required. Finally, ultra-low complexity, very small device size/form factor (e.g., mm thickness), longer life cycle, etc., are needed. Ambient-powered IoT is a promising technology to meet these unmet needs. An ambient-powered IoT device is an IoT device powered by energy harvesting, battery-free or with limited energy storage capability (e.g., using a capacitor), and powered by harvesting energy from radio waves, light, motion, heat, or any other suitable power source.

Energy harvested from the environment may drive data transmission and wireless communication of sensing nodes. Currently, the transmission and reception power consumption of mainstream low-power IoT communication chips (such as BLE, LoRa, NB-IoT) is in the order of tens of milliwatts or even hundreds of milliwatts, while the energy harvested from ambient energy is only in the order of microwatts, which cannot drive the operation of these types of nodes. Therefore, a completely new wireless communication technology is needed to reduce communication energy consumption to tens of microwatts or even below ten microwatts. Currently, the mainstream approach uses backscatter communication technology. Backscatter Communications is one of the key technologies for building a green, energy-saving, low-cost, and flexibly deployable future IoT, and is an important means to achieve "Intelligent Connectivity of Everything". The approach that may be adopted includes backscatter transmission technology (Backscatter Communications).

As shown in FIG. 1B, backscatter transmission may utilize the principle of radio frequency signal backscattering to design modulation and transmission technology with extremely low power consumption. A reader sends a physical layer signal to an ambient IoT device. The physical layer signal may be various alternating current signals such as a pulse signal. In some embodiments, the physical layer signal is used to provide energy for the ambient IoT device to transmit a signal. Therefore, the physical layer signal may be called an excitation signal or a trigger signal. By way of example, when the excitation signal reaches the ambient IoT device, a part of it is reflected. The ambient IoT device may adjust the matching between the receiving antenna and the impedance according to the information to be sent, enhance the reflection of the incident excitation signal, and modulate the acquired sensing data onto the reflected signal, completing the data transmission. This process is similar to a reflector. Compared with other communication technologies, backscatter transmission does not require a complex RF structure, reduces the use of devices such as power amplifiers, high-precision crystal oscillators, duplexers, and high-precision filters, and does not require complex baseband processing. Therefore, it may simplify the design of ambient IoT devices and significantly reduce the cost of ambient IoT device nodes. An ambient IoT device is an IoT device that operates using ambient energy. The ambient energy may include signal energy from wireless signals as described above, and may also include other environmental energies such as geothermal energy and/or light energy.

Here, the device that sends the physical layer signal to the ambient IoT device and triggers the ambient IoT device to return a reflected signal may be called an anchor of the reader of the ambient IoT device.

It is worth noting that an ambient IoT device is a device that uses a backscatter transmission mechanism for wireless communication. In specific implementations, other devices may also use the backscatter transmission mechanism for wireless communication.

The anchor or reader of the ambient IoT device may be a network node of a wireless communication network, such as an access network device, a relay node (or intermediate node), or a terminal.

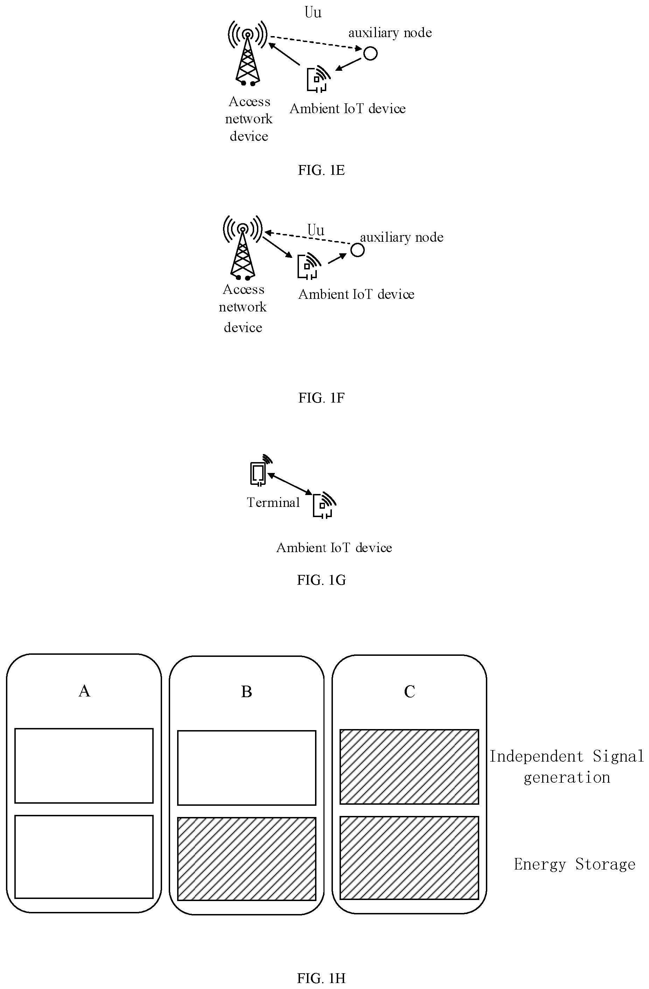

The network architecture for backscatter transmission may include but is not limited to the following:
Architecture 1: As shown in FIG. 1C, the ambient IoT device and the access network device directly perform Uplink (UL) and Downlink (DL) data transmission.
Architecture 2: As shown in FIG. 1D, the ambient IoT device and the access network device indirectly perform DL and UL data transmission; an intermediate node (or called an auxiliary node) exists for forwarding, for example, the intermediate node may be a relay, an Integrated Access Backhaul (IAB), a User Equipment (UE), a repeater (RP), etc.
Architecture 3: As shown in FIG. 1E, the ambient IoT device and the access network device directly perform data transmission on the uplink (UL), and there is an auxiliary node on the downlink (DL), which assists the base station and the ambient IoT device in downlink transmission. As shown in FIG. 1F, the ambient IoT device and the access network device directly perform data transmission on the DL, and there is an auxiliary node on the UL, which assists the base station and the ambient IoT device in uplink transmission. By way of example, the auxiliary node may be a relay, an IAB node, a first terminal, a Network Controlled Repeater (NCR).
Architecture 4: As shown in FIG. 1G, the ambient IoT device and the UE directly perform DL and UL data reception and transmission; the UE is responsible for collecting data and forwarding the collected data to the network side.

As shown in FIG. 1H, ambient IoT devices using a backscatter transmission mechanism for wireless communication may include the following three types:
Device A: has no energy storage, cannot generate signals/amplify signals independently, and may only perform backscatter transmission.

Device B: has energy storage, cannot generate signals independently, and may only perform backscatter transmission. The use of stored energy may include amplification of the backscatter signal.

Device C: has energy storage, may generate signals independently, i.e., has active Radio Frequency (RF) components for transmission.

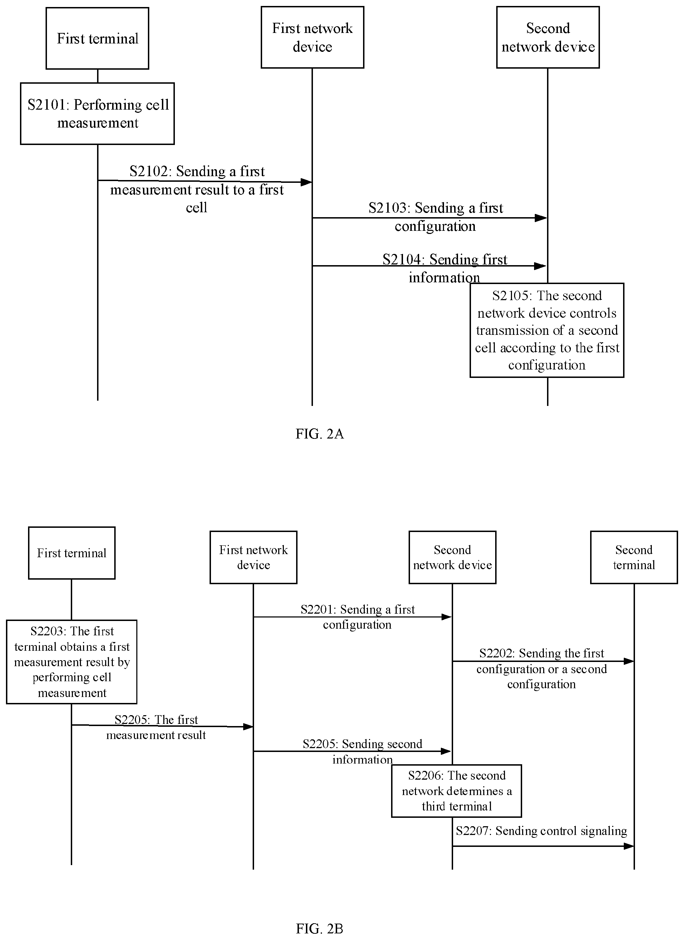

In view of this, as shown in FIG. 2A, an embodiment of the present disclosure provides a resource configuration method, performed by a communication system. The method may include the following steps.

S2101: A first terminal performs cell measurement.

In some embodiments, the first terminal may serve as an intermediate node, an auxiliary node, a relay node, or other device for an ambient energy IoT device. The first terminal may serve as an intermediate node as shown in FIG. 1D. Alternatively, the first terminal may serve as an auxiliary node as shown in FIG. 1E and/or FIG. 1F. The first terminal may also be a terminal as shown in FIG. 1G.

In some embodiments, the first terminal may be a terminal capable of performing CW transmission to a second terminal.

In some embodiments, the first terminal may be a terminal capable of receiving BS transmission from a second terminal.

In some embodiments, the first terminal is a terminal that performs CW transmission to and/or BS reception from a second terminal according to the first configuration.

By way of example, the second terminal may serve as an ambient IoT device. By way of example, the second terminal may be device A, device B, and/or device C as shown in FIG. 1H.

In some embodiments, the first resource is used for CW transmission and/or BS reception, and the first terminal does not perform uplink (UL) transmission and/or does not perform downlink (DL) reception at least on the first resource.

In some embodiments, the first resource is not used for UL transmission and DL reception of the first terminal, and both UL transmission and DL reception are Uu interface transmissions. In this way, interference between Uu interface transmission and CW transmission and/or BS reception may be at least reduced.

In some embodiments, the first resource is used for CW transmission and/or BS reception, and the first terminal does not perform UL transmission and does not perform DL reception on the first resource and within a first interval.

The first interval is used for frequency domain isolation between CW transmission and at least one of UL transmission or DL reception; and/or the first interval is used for time domain isolation between BS reception and at least one of UL transmission and DL reception.

In some embodiments, the first interval is used for frequency domain protection (or for frequency domain isolation).

In some embodiments, the first interval is used for time domain protection (or for time domain isolation).

In some embodiments, the first interval is used for frequency domain and time domain protection (or for frequency domain and time domain isolation).

If the first interval is used for time domain isolation or frequency domain isolation, good isolation protection may already be achieved, then resources required for isolation may be reduced, improving effective resource usage.

If the first interval is used for time domain isolation and frequency domain isolation, good isolation between different transmissions may be achieved on the one hand, reducing interference within the first terminal, protecting the hardware of the first terminal, and on the other hand, providing sufficient switching time for the first terminal to change transmission types, ensuring communication quality of various transmissions.

In some embodiments, the first resource is dedicated to CW transmission, and the first terminal does not perform UL transmission, DL reception, or BS reception on the first resource.

If the first resource is dedicated to CW transmission, it is not used for UL transmission, DL reception, or BS reception, which may maximize the immunity of CW transmission from interference.

In some embodiments, the first resource is dedicated to CW transmission, and the first terminal does not perform UL transmission, DL reception, or BS reception on the first resource and within a second interval. The second interval is used for frequency domain isolation between CW transmission and at least one of UL transmission, DL reception, or BS reception; and/or the second interval is used for time domain isolation between BS reception and at least one of UL transmission, DL reception, or BS reception.

In some embodiments, the second interval is used for frequency domain protection (or for frequency domain isolation).

In some embodiments, the second interval is used for time domain protection (or for time domain isolation).

In some embodiments, the second interval is used for frequency domain and time domain protection (or for frequency domain and time domain isolation).

If the second interval is used for time domain isolation or frequency domain isolation, good isolation may already be achieved, then resources required for isolation may be reduced, improving effective resource usage.

If the second interval is used for time domain isolation and frequency domain isolation, good isolation between different transmissions may be achieved on the one hand, reducing interference within the first terminal, protecting the hardware of the first terminal, and on the other hand, providing sufficient switching time for the first terminal to change transmission types, ensuring communication quality of various transmissions.

In some embodiments, the first resource is dedicated to BS reception, and the first terminal does not perform UL transmission, DL reception, or CW transmission on the first resource.

In some embodiments, the first resource is dedicated to BS reception, and the first terminal does not perform UL transmission, DL reception, or CW transmission on the first resource and within a third interval. The third interval is used for frequency domain isolation between BS reception and at least one of UL transmission, DL reception, or CW transmission; and/or the second interval is used for time domain isolation between BS reception and at least one of UL transmission, DL reception, or CW transmission.

In some embodiments, the third interval is used for frequency domain protection (or for frequency domain isolation).

In some embodiments, the third interval is used for time domain protection (or for time domain isolation).

In some embodiments, the third interval is used for frequency domain and time domain protection (or for frequency domain and time domain isolation).

If the third interval is used for time domain isolation or frequency domain isolation, good isolation may already be achieved, then resources required for isolation may be reduced, improving effective resource usage.

If the third interval is used for time domain isolation and frequency domain isolation, good isolation between different transmissions may be achieved on the one hand, reducing interference within the first terminal, protecting the hardware of the first terminal, and on the other hand, providing sufficient switching time for the first terminal to change transmission types, ensuring communication quality of various transmissions.

In some embodiments, the first interval, the second interval, and the third interval may all be guard intervals. On the one hand, the introduction of the guard interval may avoid mutual interference caused by delayed switching of different transmission types of the first terminal, and on the other hand, it may reduce damage to hardware devices caused by such untimely cessation of a certain type of transmission.

In some embodiments, the terminal performs measurement of the first cell to obtain the first measurement result.

In some embodiments, the terminal performs measurement of the second cell to obtain the first measurement result.

The first cell is a serving cell of the terminal, and the second cell is a neighboring cell of the serving cell.

The first terminal sends the first measurement result to the first network device.

In some embodiments, the terminal measures its own beam direction in the first cell.

In some embodiments, the terminal measures the reference signal reception quality and/or signal to interference plus noise ratio of the first cell and/or the second cell.

In some embodiments, the first measurement result indicates a location of the first terminal, a beam direction of the first terminal, and/or interference of the second cell suffered by the first terminal.

S2102: The terminal sends the first measurement result to the first cell.

In some embodiments, the first measurement result may be a measurement result reported periodically, and the terminal reports the first measurement result periodically.

In some embodiments, the first measurement result may be a measurement result reported based on event triggering, and the terminal reports the first measurement result when a corresponding event is triggered.

In some embodiments, the first measurement result is a measurement result reported based on triggering of a first event, and the terminal reports the first measurement result when the first event of the terminal is triggered.

In some embodiments, the first event may include but is not limited to at least one of:
the first measurement result indicating that the first terminal is located at an edge region of the first cell;
the first measurement result indicating that the beam direction of the first terminal is pointed toward the second cell;
the first measurement result indicating that a signal quality of the first cell is less than or equal to a second threshold; or
the first measurement result indicating that neighboring cell interference of the second cell is greater than or equal to a third threshold.

In some embodiments, the first cell may include a central region and an edge region. The edge region is located at the periphery of the central region.

In some embodiments, the first measurement result indicates that the first terminal is located at any position in the edge region of the first cell, and it is determined that the first event is triggered.

In some embodiments, the first measurement result indicates that the first terminal is located at the edge region of the first cell and the first cell is located at the edge near the second cell, then it is determined that the first event is triggered.

If the first terminal is located in the edge region, the probability of being interfered by the neighboring cell is high, or the degree of interference from the neighboring cell is high.

In some embodiments, the first measurement result indicates that the beam direction of the first terminal is pointed toward the second cell, which may cause interference to the second cell or be interfered by the second cell.

In some embodiments, the first measurement result indicates that the first terminal is located on the side of the cell center point of the first cell close to the second cell, and the beam direction of the first terminal is pointed toward the second cell, then it is determined that the first event is triggered.

In some embodiments, the first terminal measures the signal quality of the first cell below the second threshold, and determines that the first event is triggered. The signal quality may include, but is not limited to, Reference Signal Received Quality (RSRQ) and/or Signal to Interference plus Noise Ratio (SINR) being less than a corresponding threshold.

In some embodiments, the first terminal performs uplink measurement and/or downlink measurement of the neighboring cell, and determines that the neighboring cell interference is greater than the third threshold, indicating that the neighboring cell interferes with the CW transmission and/or BS reception on the first resource. The first event may be considered triggered.

In some embodiments, the first event may further include:
interference of the CW transmission of the first terminal being greater than an interference threshold; or
quality of the BS reception of the first terminal being less than a quality threshold.

S2103: The first network device sends the first configuration to the second network device.

In some embodiments, the first network device and the second network device may be access network devices.

In some embodiments, the first network device may be a network device that sends the first configuration to the first terminal.

In some embodiments, the first network device corresponds to the first cell, and the second network device corresponds to the second cell.

In some embodiments, the first cell and the second cell are neighboring cells to each other.

In some embodiments, the first cell and the second cell are same-frequency neighboring cells to each other.

In some embodiments, the first cell and the second cell are co-channel cells to each other.

In some embodiments, terminals camping on the first cell may include the first terminal.

In some embodiments, the first cell and the second cell are neighboring cells to each other.

In some embodiments, the first cell and the second cell have overlapping coverage.

The first configuration here may be a configuration of the first resource, and is a configuration used for the first terminal to perform CW transmission and/or BS reception.

In some embodiments, the reference timing used in the first configuration may be the timing of the first network device.

In some embodiments, the reference timing used in the first configuration may be the timing of the second network device.

The first resource is used for the first terminal to perform continuous wave (CW) transmission to and/or backscatter (BS) reception from the second terminal.

In some embodiments, the CW transmission performed by the first terminal to the second terminal is equivalent to providing an excitation signal to the second terminal.

By way of example, the first terminal may serve as an intermediate node, an auxiliary node, a relay node, or other device for an ambient energy IoT device. The first terminal may serve as an intermediate node as shown in FIG. 1D. Alternatively, the first terminal may serve as an auxiliary node as shown in FIG. 1E and/or FIG. 1F. The first terminal may also be a terminal as shown in FIG. 1G.

The first configuration is at least used for the second network device to control transmission of the second cell.

The first configuration is at least used for the second network device to control first transmission of the terminal in the second cell and/or second transmission of the second network device.

In some embodiments, the first transmission includes at least one of: Uu interface transmission, CW transmission, BS reception, or SL transmission.

In some embodiments, the first transmission may at least include Uu transmission. Since Uu transmission generally has high transmit power and causes the most serious interference to the CW transmission and/or BS reception of the first terminal, in some cases, the first transmission at least includes Uu transmission.

In some embodiments, the second transmission includes at least one of: Uu interface transmission, CW transmission, or BS reception.

In some implementations, the distance between the second network device and the first terminal may be relatively large, while the distance between the terminal in the second cell and the first terminal may be relatively small. Therefore, the first transmission of the terminal in the second cell may cause greater interference to the first terminal. Accordingly, the second network device may at least control the first transmission of the terminal in the second cell according to the first configuration. Furthermore, the second network device may at least control uplink transmission of the terminal in the second cell according to the first configuration. During uplink transmission, the signal is transmitted from the terminal toward the second network device. At this time, the signal strength of the uplink transmission near the second terminal is strongest, thus causing the greatest interference to the first terminal. However, the signal strength of the terminal's reception is reduced due to attenuation over the wireless path, thus causing relatively less interference to the first terminal.

In some embodiments, Uu interface transmission may include: Downlink (DL) transmission and/or Uplink (UL) transmission.

In some embodiments, the first configuration may be a semi-static configuration, a periodic configuration, or a one-time configuration.

In some embodiments, the first configuration may include but is not limited to at least one of:
time domain information indicating a time location of the first resource;
reference timing information indicating a reference timing of the first resource;
frequency domain information indicating a frequency location of the first resource;
cell information indicating a cell corresponding to the first resource; or
validity period information indicating a validity period of the first resource.

The time domain information may include absolute time, identifiers of various time units, etc. The time units here may include: slots, mini-slots, symbols, etc.

In some embodiments, the reference timing information may provide a reference timing corresponding to the time domain information. Specifically, the reference timing information may include: a cell identifier. The cell identifier indicates that the reference timing is based on the clock of the corresponding cell.

In some embodiments, the timing reference information may further include a time offset value, and the time offset value together with the cell identifier is used to determine the reference timing.

In some embodiments, the time domain information includes at least one of:
period information indicating a period of the first resource;
an offset indicating a time interval of a time domain start position of an initial first resource relative to a reception time of configuration information; or
duration information indicating a duration of one first resource.

In some embodiments, the frequency domain information includes at least one of:
bandwidth part (BWP) information indicating a BWP in which the first resource is located;
frequency band information indicating a frequency band in which the first resource is located;
frequency layer information indicating a frequency layer in which the first resource is located;
carrier information indicating a carrier on which the first resource is located; or
subcarrier spacing information indicating a subcarrier spacing corresponding to the first resource.

In some embodiments, the cell in which the first resource is located includes at least one of:
a primary cell;
a primary secondary cell;
a special cell, the special cell including a primary cell and a primary secondary cell; or
a secondary cell different from the primary secondary cell.

In some embodiments, the cell information may include: a cell identity (ID) and/or a cell index.

In some embodiments, the cell ID may include: a physical cell identifier, a cell identifier under the MAC layer, etc.

In some embodiments, the validity period information may carry absolute duration information, or may be a number of time units in wireless communication, such as a number of slots, a number of symbols, etc.

In some embodiments, the first network device determines whether to send the first configuration to the second network device according to the first measurement result.

In some embodiments, if the first measurement result is reported periodically, when it is determined according to the first measurement result that a first condition is satisfied, the first configuration is sent to the second network device.

The first condition includes at least one of:
the first measurement result indicating that the first terminal enters an edge region of the first cell;
the first measurement result indicating that a beam direction of the first terminal is pointed toward the second cell; or
the first measurement result indicating that neighboring cell interference of the first terminal is high.

By way of example, the first measurement result indicates that the first terminal is located at an edge region of the first cell, and the first configuration is sent to the second network device.

By way of example, the first measurement result indicates that a beam direction used by the first terminal is pointed toward the second cell, and the first configuration is sent to the second network device.

By way of example, the first measurement result indicates that the first terminal suffers interference from the second cell, and the first configuration is sent to the second network device.

In some embodiments, if the first measurement result is reported based on event triggering, the first configuration is sent to the second network device when the first measurement result is received.

S2104: The first network device sends first information to the second network device.

The first information may be a type of indication information determined by the first network device according to the first measurement result.

In some embodiments, the indication information is at least used for the second network device to determine a third terminal not performing first transmission on the first resource; the third terminal camps on the second cell; the first transmission includes at least one of: Uu interface transmission, CW transmission, or BS reception; and/or the indication information is used for the second network device to determine whether to activate controlling, according to the first configuration, the transmission of the second cell.

In some embodiments, the first information indicates a location of the first terminal, a beam direction of the first terminal, and/or interference of the second cell suffered by the first terminal.

In some embodiments, the first information is used for the second network device to determine a third terminal not performing Uu interface transmission, CW transmission, and/or BS reception on the first resource.

In some embodiments, the first information may include at least one of:
location information of the first terminal;
beam information of the first terminal, the beam information indicating a beam direction and/or a beam identifier; or
information on neighboring cell interference of the first terminal, e.g., interference direction, interference magnitude, etc.

In some embodiments, the first information and the first configuration may be sent together to the second network device.

In some embodiments, the first information and the first configuration may be sent separately to the second network device.

It is worth noting: after receiving the first measurement result, the first network device may also send the first configuration to the second network device without sending the first information. That is, after detecting that the first terminal is interfered by the second cell, the first configuration is sent to the second network device. Upon receiving the first configuration, the second network device considers that the first terminal in the first cell is interfered, and accordingly controls the transmission of the second cell, at least reducing interference from the terminal in the second cell to the CW transmission and/or BS reception of the first terminal.

S2105: The second network device controls transmission of the second cell according to the first configuration.

In some embodiments, the second network device controls, according to the first configuration, transmission of itself and/or terminals camping in the second cell.

In some embodiments, the transmission of the second cell may include transmission occurring within the coverage area of the second cell.

In some embodiments, the transmission of the second cell may include transmission performed using resources of the second cell.

In some embodiments, the transmission of the second cell may include but is not limited to at least one of:
Uu interface transmission of the second cell, in which the Uu interface transmission may include: downlink transmission of the second network device, uplink reception of the second network device, uplink transmission of the terminal in the second cell, and/or downlink reception of the terminal in the second cell;
CW transmission of the network device and/or the terminal in the second cell;
BS reception of the network device and/or the terminal in the second cell; or
sidelink (SL) transmission between terminals in the second cell.

The second network device controlling, according to the first configuration, the transmission of the second cell includes at least one of:
the second network device does not configure transmission of the second cell on the first resource;
the second network device does not schedule transmission of the second cell on the first resource;
the second network device controls stopping of transmission configured on the first resource; or
the second network device controls stopping of transmission scheduled on the first resource;
the transmission of the second cell here may include one or more of: Uu interface transmission, CW transmission, BS reception, or SL transmission.

In some embodiments, the second network device controls, according to the first configuration, itself not to perform Uu interface transmission on the first resource.

In some embodiments, the second network device controls, according to the first configuration, itself not to perform Uu interface transmission and not to perform CW transmission on the first resource.

In some embodiments, the second network device controls, according to the first configuration, itself not to perform Uu interface transmission and not to perform BS transmission on the first resource.

In some embodiments, the second network device controls, according to the first configuration, itself not to perform Uu interface transmission, not to perform BS transmission, and not to perform CW transmission on the first resource.

In some embodiments, the second network device controls, according to the first configuration, all terminals in the second cell not to perform first transmission on the first resource. In some embodiments, the second network device controls, according to the first configuration, all terminals in the second cell not to perform first transmission on the first resource and a guard interval.

In some embodiments, the second network device controls, according to the first configuration, a third terminal in the second cell not to perform first transmission on the first resource.

In some embodiments, the second network device controls, according to the first configuration, the third terminal in the second cell not to perform first transmission on the first resource and a guard interval.

In some embodiments, the first transmission may include at least one of:
Uu interface transmission;
CW transmission;
BS reception; or
SL transmission.

In some embodiments, the second network device controls, according to the first configuration, itself not to perform second transmission on the first resource in the second cell.

In some embodiments, the second network device controls, according to the first configuration, itself not to perform second transmission on the first resource and a guard interval in the second cell.

In some embodiments, the second transmission may include at least one of:
Uu interface transmission of the second network device;
CW transmission; or
BS reception.

In some embodiments, the guard interval may be a frequency domain interval and/or a time domain interval.

In some embodiments, S2105 may include: determining a third terminal that interferes with the CW transmission and/or BS reception of the first terminal; and controlling transmission of the third terminal according to the first configuration.

In some embodiments, the third terminal is determined according to the first information sent by the first network device.

In some embodiments, the third terminal is determined according to a second measurement result of a fourth terminal.

In some embodiments, the third terminal is determined according to the first information and the measurement result of the fourth terminal.

In some embodiments, the second measurement result indicates a location of the fourth terminal, a beam direction of the fourth terminal, and/or interference of the first cell suffered by the fourth terminal. The second network device determines the third terminal from the fourth terminal according to the second measurement result.

In some embodiments, the third terminal includes at least one of:
a terminal located at an edge region of the second cell, in which the second cell being associated with the second network device;
a terminal having a beam direction pointed toward the first terminal; or
a terminal having neighboring cell interference greater than a first threshold.

In some embodiments, controlling the transmission of the second cell of the second network device according to the first configuration includes:
in a case where the reference timing of the first configuration is a timing of the first network device, determining, according to the first configuration, time domain information of the first resource when the first resource uses a timing of the second network device.

For example, when the timings of the first network device and the second network device are the same, conversion of the time domain information of the first resource when using the second network device may not be required.

For another example, when the first configuration uses the timing of the second network device, conversion of the time domain information of the first resource when using the second network device may not be required.

For another example, when the first configuration uses the timing of the first network device and the timings of the first network device and the second network device are different, the second network device needs to convert the time domain information of the first resource when using the timing of the second network device.

In some embodiments, controlling the transmission of the third terminal according to the first configuration includes one of:
sending a second configuration to the third terminal according to the first configuration, in which the second configuration is a configuration of a second resource, the third terminal does not perform at least one of first transmissions on the second resource, the second resource is determined according to the first resource, and the second resource and the first resource have different reference timings; or
sending the first configuration to the third terminal, in which the first configuration is used for the third terminal not to perform Uu interface transmission on the first resource. In some embodiments, the second configuration is generated according to the first configuration.

By way of example, the first configuration is generated according to the timing of the first cell, and the second configuration may be generated according to the timing of the second cell.

The timing of the first cell and the timing of the second cell may have an offset. Accordingly, the second network device may obtain a timing offset based on the timing of the first cell and the timing of the second cell, and correct the time domain information of the first configuration based on the timing offset to obtain the second configuration.

In some embodiments, the reference timing of the first configuration is the timing of the second cell, and the second network device may directly send the first configuration to the terminal in the second cell.

In some embodiments, the reference timing of the first configuration is the timing of the first cell, and the timing of the first cell and the timing of the second cell are the same or the difference is sufficiently small, then the second network device may directly send the first configuration to the terminal in the second cell.

In some embodiments, the reference timing of the first configuration is the timing of the first cell, and the timing of the first cell and the timing of the second cell are significantly different (e.g., greater than a timing difference threshold), then the second network device generates the second configuration according to the first configuration and sends the second configuration to terminals in the first cell.

In some embodiments, controlling the transmission of the third terminal according to the first configuration includes at least one of:
controlling, according to the first configuration, the third terminal not to perform Uu interface transmission, CW transmission, and/or BS reception on the first resource; or
controlling, according to the first configuration, the third terminal not to perform Uu interface transmission, CW transmission, and/or BS reception on the first resource and a guard interval.

In some embodiments, the guard interval may include: a frequency domain interval and/or a time domain interval.

In some embodiments, the time domain interval is used for time domain isolation between the first transmission of the third terminal and the CW transmission of the first terminal.

In some embodiments, the frequency domain interval is used for frequency isolation between the first transmission of the third terminal and the BS transmission of the first terminal.

In some embodiments, if the second network device receives the separately sent first information, the second network device may have already sent the first configuration or the second configuration to the terminal, then it may instruct the terminal to stop Uu interface transmission on the first resource according to the first configuration and/or the second configuration through activation signaling.

In some embodiments, a terminal in the second cell may not perform Uu interface transmission on the first resource according to the first configuration and/or the second configuration without configuration or scheduling by the base station.

In some embodiments, the second network device may avoid the first resource in the spatial and/or frequency domain by controlling beam switching, activation BWP switching, etc., of at least some terminals in the second cell (e.g., the third terminal or all terminals in the second cell), at least partially reducing interference from the terminal in the second cell to the CW transmission and/or BS reception of the first terminal.

In some embodiments, the second network device may at least partially reduce interference from the second cell to the CW transmission and/or BS reception of the first terminal by controlling some terminals in the second cell (e.g., the third terminal or all terminals in the second cell) to stop Uu interface transmission at the time domain position corresponding to the first resource and/or the Uu interface transmission of the second cell itself.

In some embodiments, the second network device may also schedule or configure CW transmission and/or BS reception of at least some terminals in the second cell according to the first configuration. For example, a fifth terminal in the second cell needs to perform CW transmission and/or BS reception. In this case, considering mutual interference between the fifth terminal and the first terminal, a fifth terminal with overlapping spatial beams and/or overlapping time-frequency domain resources may be selected, and interference to the CW transmission and/or BS reception of the first terminal may be reduced by beam switching, activation BWP switching, time domain and frequency domain migration of CW transmission and/or BS reception.

In some embodiments, all terminals in the second cell do not perform first transmission on the first resource.

In some embodiments, all terminals in the second cell do not perform first transmission on the first resource and a guard interval.

In some embodiments, all terminals in the second cell do not perform first transmission on the second resource.

In some embodiments, all terminals in the second cell do not perform first transmission on the second resource and a guard interval.

In some embodiments, the third terminal in the second cell does not perform first transmission on the first resource.

In some embodiments, the third terminal in the second cell does not perform first transmission on the first resource and a guard interval.

In some embodiments, the third terminal in the second cell does not perform first transmission on the second resource.

In some embodiments, the third terminal in the second cell does not perform first transmission on the second resource and a guard interval.

In some embodiments, a terminal in the second cell at least does not perform Uu interface transmission on the first resource.

In some embodiments, all terminals in the second cell at least do not perform Uu interface transmission on the first resource.

In some embodiments, the third terminal in the second cell at least does not perform Uu interface transmission on the first resource.

In some embodiments, a terminal in an edge region of the second cell at least does not perform Uu interface transmission on the first resource.

In some embodiments, a terminal in the second cell having a beam direction pointed toward the first cell at least does not perform Uu interface transmission on the first resource.

In some embodiments, a terminal in the second cell having a beam direction pointed toward the first cell and located in an edge region of the second cell at least does not perform Uu interface transmission on the first resource.

In some embodiments, all terminals in the second cell at least do not perform Uu interface transmission on the first resource and a guard interval.

In some embodiments, the third terminal in the second cell at least does not perform Uu interface transmission on the first resource and a guard interval.

In some embodiments, a terminal in an edge region of the second cell at least does not perform Uu interface transmission on the first resource and a guard interval.

In some embodiments, a terminal in the second cell having a beam direction pointed toward the first cell at least does not perform Uu interface transmission on the first resource and a guard interval.

In some embodiments, a terminal in the second cell having a beam direction pointed toward the first cell and located in an edge region of the second cell at least does not perform Uu interface transmission on the first resource and a guard interval.

In view of this, as shown in FIG. 2B, an embodiment of the present disclosure provides a resource configuration method, performed by a communication system. The method may include following steps.

S2201: A first network device sends a first configuration to a second network device.

For the first network device, the second network device, and the first configuration, reference may be made to the corresponding parts of the embodiment corresponding to FIG. 2A.

S2202: The second network device sends the first configuration and/or a second configuration to a terminal in the second cell.

Here, the second network device sending the first configuration and/or the second configuration to the terminal in the second cell is a specific implementation of the second network device controlling transmission of the second cell according to the first configuration.

In some embodiments, the second configuration is generated according to the first configuration.

By way of example, the first configuration is generated according to the timing of the first cell, and the second configuration may be generated according to the timing of the second cell.

The timing of the first cell and the timing of the second cell may have an offset. Accordingly, the second network device may obtain a timing offset based on the timing of the first cell and the timing of the second cell, and correct the time domain information of the first configuration based on the timing offset to obtain the second configuration.

In some embodiments, the reference timing of the first configuration is the timing of the second cell, and the second network device may directly send the first configuration to the terminal in the second cell.

In some embodiments, the reference timing of the first configuration is the timing of the first cell, and the timing of the first cell and the timing of the second cell are the same or the difference is sufficiently small, then the second network device may directly send the first configuration to the terminal in the second cell.

In some embodiments, the reference timing of the first configuration is the timing of the first cell, and the timing of the first cell and the timing of the second cell are significantly different (e.g., greater than a timing difference threshold), then the second network device generates the second configuration according to the first configuration and sends the second configuration to the terminal in the first cell.

In some embodiments, the second network device controls, according to the first configuration, transmission of itself and/or a terminal camping in the second cell.

In some embodiments, the transmission of the second cell may include transmission occurring within the coverage area of the second cell.

In some embodiments, the transmission of the second cell may include transmission performed using a resource of the second cell.

In some embodiments, the transmission of the second cell may include but is not limited to at least one of:
Uu interface transmission of the second cell, in which the Uu interface transmission may include: downlink transmission of the second network device, uplink reception of the second network device, uplink transmission of the terminal in the second cell, and/or downlink reception of the terminal in the second cell;
CW transmission of the network device and/or the terminal in the second cell;
BS reception of the network device and/or the terminal in the second cell; or
sidelink (SL) transmission between terminals in the second cell.

The second network device controlling, according to the first configuration, the transmission of the second cell includes at least one of:
the second network device does not configure transmission of the second cell on the first resource;
the second network device does not schedule transmission of the second cell on the first resource;
the second network device controls stopping of transmission configured on the first resource; or
the second network device controls stopping of transmission scheduled on the first resource,
in which the transmission of the second cell here may include one or more of: Uu interface transmission, CW transmission, BS reception, or SL transmission.

In some embodiments, the second network device controls, according to the first configuration, itself not to perform Uu interface transmission on the first resource.

In some embodiments, the second network device controls, according to the first configuration, itself not to perform Uu interface transmission and not to perform CW transmission on the first resource.

In some embodiments, the second network device controls, according to the first configuration, itself not to perform Uu interface transmission and not to perform BS transmission on the first resource.

In some embodiments, the second network device controls, according to the first configuration, itself not to perform Uu interface transmission, not to perform BS transmission, and not to perform CW transmission on the first resource.

In some embodiments, the second network device controls, according to the first configuration, all terminals in the second cell not to perform first transmission on the first resource. In some embodiments, the second network device controls, according to the first configuration, all terminals in the second cell not to perform first transmission on the first resource and a guard interval.

In some embodiments, the second network device controls, according to the first configuration, a third terminal in the second cell not to perform first transmission on the first resource.

In some embodiments, the second network device controls, according to the first configuration, the third terminal in the second cell not to perform first transmission on the first resource and a guard interval.

In some embodiments, the first transmission may include at least one of:
Uu interface transmission;
CW transmission;
BS reception; or
SL transmission.

In some embodiments, the second network device controls, according to the first configuration, itself not to perform second transmission on the first resource in the second cell.

In some embodiments, the second network device controls, according to the first configuration, itself not to perform second transmission on the first resource and a guard interval in the second cell.

In some embodiments, the second transmission may include at least one of:
Uu interface transmission of the second network device;
CW transmission; or
BS reception.

In some embodiments, the guard interval may be a frequency domain interval and/or a time domain interval.

For an optional implementation of S2202 here, reference may be made to S2105 in the embodiment corresponding to FIG. 2A.

In some embodiments, the second configuration is sent to the terminal in the second cell according to the first configuration.

The second configuration is a configuration of a second resource. The second configuration is used to control first transmission of the third terminal on the second resource. For example, the second configuration is used for the third terminal to stop at least one of Uu interface transmission, CW transmission, or BS reception on the second resource.

In some embodiments, the second resource is determined according to the first resource, and the second resource and the first resource have different reference timings.

In some embodiments, the first configuration is sent to the terminal in the second cell. The first configuration is used for a terminal to control first transmission on the first resource.

By way of example, the first configuration is used for the third terminal to stop performing at least one of Uu interface transmission, BS reception, or CW transmission on the first resource.

S2203: The first terminal obtains a first measurement result by performing cell measurement.

For optional manners in which the terminal performs cell measurement here, reference may be made to S2101 in the embodiment corresponding to FIG. 2A.

S2204: The first terminal sends the first measurement result to the first network device.

For optional manners in which the terminal performs cell measurement here, reference may be made to S2102 in the embodiment corresponding to FIG. 2A.

S2205: The first network device sends second information to the second network device.

In some embodiments, the second information at least indicates whether the second network device activates controlling, according to the first configuration, the transmission of the second cell.

In some embodiments, the second information includes at least one of:
a first instruction at least indicating whether the second network device activates controlling, according to the first configuration, the transmission of the second cell; or
third information indicating at least one of the location of the first terminal, the beam direction of the first terminal, or the interference of the second cell suffered by the first terminal.

S2206: The second network device determines a third terminal.

For the description of the third terminal here, reference may be made to the embodiment corresponding to FIG. 2A.

In some embodiments, the second network device may determine the third terminal according to the second information. By way of example, the third terminal includes at least one of:
a terminal located at an edge region of the second cell; the second cell being associated with the second network device;
a terminal having a beam direction pointed toward the first terminal; or
a terminal having neighboring cell interference greater than a first threshold.

In some embodiments, the second network device determines the third terminal according to a second measurement result of a fourth terminal.

In some embodiments, the second network device determines the third terminal according to the second measurement result of the fourth terminal and the second information.

S2207: The second network device sends control signaling to the third terminal.

In some embodiments, the control signaling is used to control the third terminal not to perform first transmission on the first resource according to the first configuration.

In some embodiments, the control signaling is used to control the third terminal not to perform first transmission on the first resource and a guard interval according to the first configuration.

In some embodiments, the control signaling is used to control the third terminal not to perform first transmission on the second resource according to the second configuration.

In some embodiments, the control signaling is used to control the third terminal not to perform first transmission on the second resource and a guard interval according to the second configuration.

In some embodiments, the first transmission includes at least one of:
Uu interface transmission, especially uplink transmission of Uu transmission;
BS transmission;
CW reception; or
SL transmission.

In some embodiments, the control signaling is used to control the third terminal not to perform Uu interface transmission on the first resource and a guard interval according to the first configuration and/or the second configuration.

In some embodiments, the second network device may avoid the first resource in the spatial and/or frequency domain by controlling beam switching, activation BWP switching, etc., of at least some terminals in the second cell (e.g., the third terminal or all terminals in the second cell), at least partially reducing interference from the terminal in the second cell to the CW transmission and/or BS reception of the first terminal.

In some embodiments, the second network device may at least partially reduce interference from the second cell to the CW transmission and/or BS reception of the first terminal by controlling some terminals in the second cell (e.g., the third terminal or all terminals in the second cell) to stop Uu interface transmission at the time domain position corresponding to the first resource and/or the Uu interface transmission of the second cell itself.

In some embodiments, the second network device may also schedule or configure CW transmission and/or BS reception of at least some terminals in the second cell according to the first configuration. For example, a fifth terminal in the second cell needs to perform CW transmission and/or BS reception. In this case, considering mutual interference between the fifth terminal and the first terminal, a fifth terminal with overlapping spatial beams and/or overlapping time-frequency domain resources may be selected, and interference to the CW transmission and/or BS reception of the first terminal may be reduced by beam switching, activation BWP switching, time domain and frequency domain migration of CW transmission and/or BS reception.

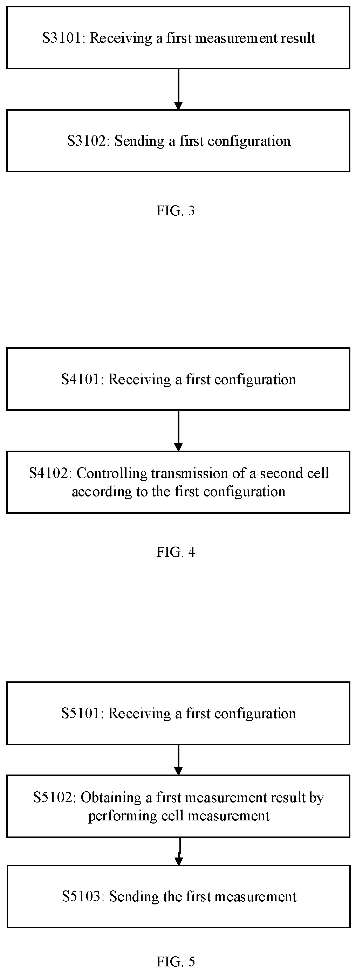

As shown in FIG. 3, an embodiment of the present disclosure provides a resource configuration method, which may be performed by a first network device. The method may include the following steps.

S3101: A first measurement result is received.

In some embodiments, the first network device receives the first measurement result sent by a terminal.

In some embodiments, the first measurement result indicates a location of the first terminal, a beam direction of the first terminal, and/or interference of the second cell suffered by the first terminal.

In some embodiments, the first measurement result may be a measurement result reported periodically by the terminal, or a measurement result reported based on event triggering. For example, the event may be the first event mentioned in the embodiments corresponding to FIG. 2A and FIG. 2B.

In some embodiments, for the description related to the first measurement result, reference may be made to the relevant description of the embodiments corresponding to FIG. 2A and FIG. 2B.

S3102: The first configuration is sent.

In some embodiments, the first network device sends the first configuration to the second network device.

In some embodiments, the first network device sending the first configuration to the second network device may include but is not limited to at least one of the following cases.

The first network device sends the first configuration to the second network device according to the first measurement result, specifically as shown in 2103 of the embodiment corresponding to FIG. 2A; further, the first network device may also send the first information to the second network device while sending the first configuration to the second network device, and of course, the first information may be omitted. For the relevant description of the first information, reference may be made to the embodiment corresponding to FIG. 2A.

The first network device sends the first configuration to the second network device before receiving the first measurement result, and after receiving the first measurement result, the first network device sends the first measurement result and/or the second information to the second network device. By way of example, for the operation of the first network device sending the first configuration to the second network device here, reference may be made to S2201 of the embodiment corresponding to FIG. 2B, and for the operation of the first network device sending the first measurement result and/or the second information to the second network device, reference may be made to S2204 and S2205 of the embodiment corresponding to FIG. 2B.

In some embodiments, the above S3201 may be omitted. For example, after acquiring the first configuration, the first network device sends the first configuration to the second network device, and the second network device configures and/or schedules transmission of the second cell according to the time-frequency domain position occupied by the first resource in the first configuration.

As shown in FIG. 4, an embodiment of the present disclosure provides a resource configuration method, which may be performed by a second network device. The method may include the following steps.

S4101: A first configuration is received.

In some embodiments, the second network device receives the first configuration from the first network device. Specifically, for any implementable manner in which the second network device receives the first configuration from the first network device, reference may be made to the embodiments corresponding to FIG. 2A and/or FIG. 2B.

In some embodiments, the second network device receives the first configuration sent by the first network device according to the first measurement result. In this case, the second network device may also receive the first information from the first network device, or may not receive the first information.

In some embodiments, the first information indicates a location of the first terminal, a beam direction of the first terminal, and/or interference of the second cell suffered by the first terminal.

In some embodiments, the first information is used for the second network device to determine a third terminal not performing first transmission on the first resource.

In some embodiments, the first transmission includes but is not limited to at least one of: Uu interface transmission, CW transmission, BS reception, or SL transmission.

In some embodiments, the second network device receives the first configuration sent by the first network device after acquiring the first configuration, and the sending of the first configuration is independent of the first measurement result. In this case, the second network device may also receive the second information sent by the first network device according to the first measurement result. It is worth noting that the second network device may also not receive the second information from the first network device.

In some embodiments, the second information at least indicates whether the second network device activates controlling, according to the first configuration, the transmission of the second cell.

Furthermore, after receiving the first configuration sent by the first network device based on the first measurement result, the second network device may also receive one or more instances of second information sent by the first network device according to the first measurement result within a time range corresponding to the first resource.

In some embodiments, the second information includes at least one of:
a first instruction at least indicating whether the second network device activates controlling, according to the first configuration, the transmission of the second cell; or
third information indicating at least one of the location of the first terminal, the beam direction of the first terminal, or the interference of the second cell suffered by the first terminal.

For the first configuration, the first measurement result, the first information, and/or the second information here, reference may be made to the relevant parts of the embodiments corresponding to FIG. 2A and/or FIG. 2B.

S4102: Transmission of the second cell of the second network device is controlled according to the first configuration.

In some embodiments, first transmission of at least some terminals in the second cell is controlled according to the first configuration.

In some embodiments, when the first transmission of all terminals in the second cell is controlled according to the first configuration, the terminal in the second cell does not need to perform cell measurement to obtain the second measurement result. The second network device directly sends the first configuration or the second configuration to all terminals in the second cell to avoid the CW transmission and/or BS reception of the first terminal.

In some embodiments, when the first transmission of all terminals in the second cell is controlled according to the first configuration, the terminal in the second cell does not need to perform cell measurement to obtain the second measurement result. The second network device directly sends a control instruction to all terminals in the cell, and the control instruction directly controls all terminals in the second cell to avoid the CW transmission and/or BS reception of the first terminal on the first resource.

In this case, the second network device may also not receive the first information and/or the third information from the first network device. In some embodiments, second transmission of the second network device of the second cell is controlled according to the first configuration.

In some embodiments, controlling the transmission of the second cell of the second network device according to the first configuration includes:
determining a third terminal that interferes with the CW transmission and/or BS reception of the first terminal; and
controlling transmission of the third terminal according to the first configuration.

In some embodiments, determining the third terminal that interferes with the CW transmission and/or BS reception of the first terminal includes at least one of:
determining, according to the first information, the third terminal that interferes with the CW transmission and/or BS reception of the first terminal;
determining, according to a second measurement result of a fourth terminal, the third terminal that interferes with the CW transmission and/or BS reception of the first terminal from the fourth terminal;
determining, according to the first information and the second measurement result of the fourth terminal, the third terminal that interferes with the CW transmission and/or BS reception of the first terminal from the fourth terminal;
determining, according to the second information, the third terminal that interferes with the CW transmission and/or BS reception of the first terminal; or
determining, according to the second information and the second measurement result of the fourth terminal, the third terminal that interferes with the CW transmission and/or BS reception of the first terminal from the fourth terminal.

In some embodiments, the second network device may determine the third terminal according to the first information, the third information, and/or the scheduling of the second cell by the second network device. Then, the step of receiving the second measurement result from the fourth network device is optional.

In some embodiments, controlling the transmission of the third terminal according to the first configuration includes one of:
sending a second configuration to the third terminal according to the first configuration, in which the second configuration is a configuration of a second resource, the third terminal does not perform first transmission on the second resource, the second resource is determined according to the first resource, and the second resource and the first resource have different reference timings; or
sending the first configuration to the third terminal, in which the first configuration is used for the third terminal not to perform first transmission on the first resource.

In some embodiments, the second network device also sends a control instruction to the terminal. The control instruction is used to instruct at least some terminals in the second cell to activate or stop performing first transmission according to the first configuration.

The control instruction is used to instruct at least some terminals in the second cell to activate or stop performing first transmission according to the second configuration.

In some embodiments, the at least some terminals may be the third terminal.

For an optional implementation of the second network device controlling transmission of the second cell according to the first configuration, reference may be made to S2105 in the embodiment corresponding to FIG. 2A.

For an optional implementation of the second network device controlling transmission of the second cell according to the first configuration, reference may be made to S2202, S2206, and S2207 in the embodiment corresponding to FIG. 2B.

It is worth noting: for relevant descriptions of the first information, the first configuration, the second configuration, the first transmission, the second transmission, the third terminal, the fourth terminal, the control instruction, the first measurement result, and/or the second measurement result, reference may be made to the embodiments corresponding to FIG. 2A and/or FIG. 2B.

In some cases, S4202 may be an optional step. By way of example, after receiving the first configuration, the second network device may determine whether subsequent control operations need to be performed according to its own state. For example, if the second cell is in a dormant state within the time range corresponding to the first resource, then S4202 may be omitted. For another example, if the second cell performs cell discontinuous reception within the time range corresponding to the first resource, then S4202 may be omitted. Since uplink transmission of terminals in the second cell causes the greatest interference to the first terminal, if the second cell is in cell discontinuous reception, it means that terminals stop uplink transmission. In this case, it may be considered that no additional operation for interference avoidance for the first terminal is required, and S4202 may be omitted.

As shown in FIG. 5, an embodiment of the present disclosure provides a resource configuration method, performed by a first terminal, the method includes following steps.

S5101: A first configuration is received, in which a first resource indicated by the first configuration is used for the first terminal to perform continuous wave (CW) transmission to and/or backscatter (BS) reception from a second terminal.

In some embodiments, the first terminal receives the first configuration sent by a network device.

In some embodiments, the first terminal receives the first configuration sent by a network device.

In some embodiments, the first terminal receives the first configuration of the first cell. The first configuration of the first cell may be sent by the first network device or by another network device. For example, if the first cell is a secondary cell of the terminal, the first configuration of the first cell may be sent by a primary cell of the terminal.

It is worth noting: for the relevant description of the first configuration, reference may be made to the relevant description of the embodiments corresponding to FIG. 2A and/or FIG. 2B.

In some embodiments, the first cell may be a serving cell of the first terminal.

In some embodiments, the first cell may be a cell configured with the first resource for the first terminal.

S5102: A first measurement result is obtained by performing cell measurement.

The first measurement result is obtained by performing the cell measurement according to the first configuration.

In some embodiments, obtaining the first measurement result by performing the cell measurement according to the first configuration may include:
determining, according to the first configuration, a resource location for measurement, the resource location including a time domain location and/or a frequency domain location; and
obtaining the first measurement result by performing cell measurement at the determined resource location. By way of example, the cell measurement may include: measurement of the lost cell and/or measurement of the second cell.

In some embodiments, performing cell measurement at the determined resource location may include at least one of:
performing measurement of the first cell at the determined resource location;
performing measurement of the first cell at the determined resource location and a guard interval;
performing measurement of the second cell at the determined resource location; or
performing measurement of the second cell at the determined resource location and a guard interval.

The guard interval may include a time domain interval and/or a frequency domain interval.

In some embodiments, the time domain interval is distributed adjacent to the first resource in the time domain, and/or the frequency domain interval is distributed adjacent to the first resource in the frequency domain.

In some embodiments, obtaining the first measurement result by performing the cell measurement according to the first configuration may include at least one of:
performing measurement of the first cell on the first resource according to the first configuration;
performing measurement of the first cell on a frequency band resource of the first resource starting from a time domain interval according to the first configuration, the time domain interval being adjacent to the first resource in the time domain and located before the first resource;
performing measurement of the first cell on the frequency band resource of the first resource and a frequency domain interval starting from a time domain interval according to the first configuration, the time domain interval being adjacent to the first resource in the time domain and located before the first resource;
performing measurement of the second cell on the first resource according to the first configuration;
performing measurement of the second cell on a frequency band resource of the first resource starting from a time domain interval according to the first configuration, the time domain interval being adjacent to the first resource in the time domain and located before the first resource; or
performing measurement of the second cell on the frequency band resource of the first resource and a frequency domain interval starting from a time domain interval according to the first configuration, the time domain interval being adjacent to the first resource in the time domain and located before the first resource.

In some embodiments, the first terminal measures its own location in the first cell.

In some embodiments, the first terminal measures its own beam direction.

In some embodiments, the first terminal measures its own neighboring cell interference, especially interference from the second cell.

S5103: The first measurement result is sent.

In some embodiments, the first measurement result indicates at least one of a location of the first terminal, a beam direction of the first terminal, or interference of the second cell suffered by the first terminal.

In some embodiments, the first measurement result is used for the second network device to control transmission of the second cell according to the first configuration.

In some embodiments, the first measurement result may be used for the second network device to determine a third terminal, and transmission of the third terminal in the second cell may be controlled by the second network device according to the first configuration.

In some embodiments, the first terminal reports the first measurement result periodically.

In some embodiments, the first terminal reports the first measurement result based on a trigger event.

In some embodiments, obtaining the first measurement result by performing cell measurement includes at least one of:
obtaining the first measurement result by performing measurement of the first cell; or
obtaining the first measurement result by performing measurement of the second cell, in which the first cell is associated with the first network device.

In some embodiments, sending the first measurement result to the first network device includes:
determining whether a first event is triggered; and
sending the first measurement result triggered to the first network device.

In some embodiments, determining whether the first event is triggered includes at least one of:
the first measurement result indicating that the first terminal is located at an edge region of the first cell;
the first measurement result indicating that a beam direction of the first terminal is pointed toward the second cell;
the first measurement result indicating that a measurement value of the first cell is less than or equal to a second threshold; or
the first measurement result indicating that neighboring cell interference of the second cell is greater than or equal to a third threshold.

In some embodiments, if the first terminal reports the first measurement result periodically, the first measurement result may include a measurement value, e.g., measured RSRQ, SINR, and/or beam direction, etc.

In some embodiments, if the first terminal reports the first measurement result based on event triggering, the first measurement result may include an identifier of the triggered event, etc. Reporting the first measurement result based on an event may reduce unnecessary reporting of measurement results by the first terminal.

In some embodiments, if the first terminal performs cell measurement according to the first configuration, the first terminal may also receive a third configuration from the network device. The third configuration may be used for reporting the first measurement result. For example, the third configuration may include: configuration information of a reporting resource for reporting the first measurement result and/or a threshold corresponding to the event, etc. By way of example, the first terminal may receive the third configuration while receiving the first configuration. In some embodiments, the first terminal may receive the first configuration and the third configuration separately.

In other embodiments, the first terminal may also reuse reporting resources for other measurements to report the measurement result. For example, other measurements may include but are not limited to: radio resource management measurement and/or mobility measurement of the first terminal.

In some embodiments, the first measurement result may be carried in a measurement report for transmission.

It is worth noting: for the first configuration, the first measurement result, transmission of the second cell, the first terminal, the second terminal, CW transmission and/or BS reception, reference may be made to any of the foregoing embodiments, and are not repeated here.

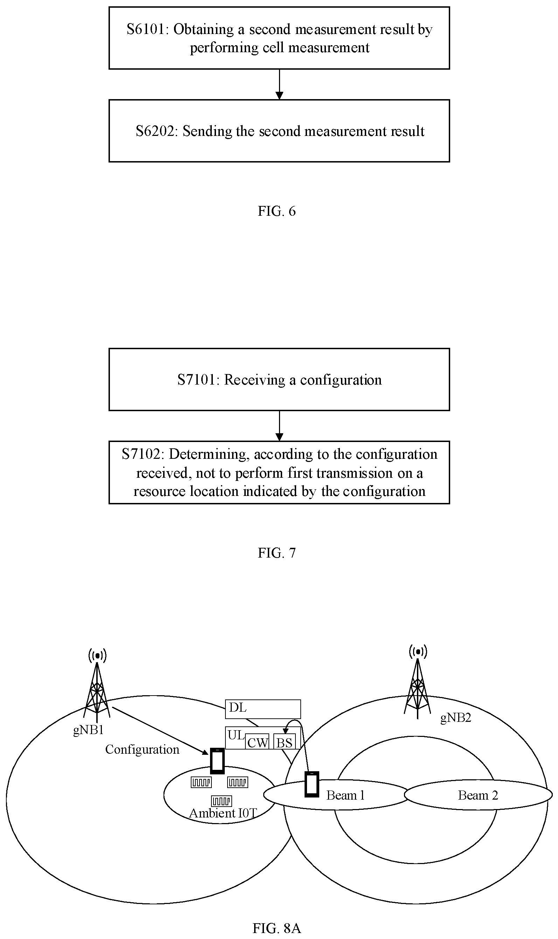

As shown in FIG. 6, an embodiment of the present disclosure provides a resource configuration method, performed by a fourth terminal, the method includes following steps.

S6101: A second measurement result is obtained by performing cell measurement.

In some embodiments, the fourth terminal may perform mobility measurement and/or radio resource management measurement to obtain a measurement result. This measurement result is regarded as a measurement result used for the second network device to determine the third terminal.

In some embodiments, the fourth terminal obtains the second measurement result by performing cell measurement according to the first configuration or the second configuration.

In some embodiments, the fourth terminal obtaining the second measurement result by performing cell measurement according to the first configuration or the second configuration may include:
the fourth terminal determining, according to the first configuration or the second configuration, a resource location for measurement, in which the resource location may include a time domain location and/or a frequency domain location; and
obtaining the second measurement result by performing cell measurement at the resource location.

In some embodiments, performing cell measurement at the resource location may include at least one of:
performing measurement of the first cell at the resource location;
performing measurement of the second cell at the resource location;
performing measurement of the first cell at the resource location and a guard interval; or
performing measurement of the second cell at the resource location and a guard interval.

The guard interval may include a frequency domain interval and/or a time domain interval.

In some embodiments, the time domain interval is distributed adjacent to the first resource in the time domain, and/or the frequency domain interval is distributed adjacent to the first resource in the frequency domain.

In some embodiments, the second measurement result indicates a location of the fourth terminal, a beam direction of the fourth terminal, and/or interference of the first cell suffered by the fourth terminal.

In some embodiments, the fourth terminal performs its own location measurement, beam direction measurement, and/or measurement of suffered neighboring cell interference. The neighboring cell interference may at least include interference from the first cell.

S6202: The second measurement result is sent.

In some embodiments, the fourth terminal sends the second measurement result to the second network device.

In some embodiments, the second measurement result is used for the second network device to control transmission of the second cell according to the first configuration.

In some embodiments, the first configuration is a configuration for a first resource sent by the first network device to the second network device.

In some embodiments, the first resource is used for the first terminal to perform continuous wave (CW) transmission to and/or backscatter (BS) reception from the second terminal.

In some embodiments, the fourth terminal reports the second measurement result periodically.

In some embodiments, the fourth terminal reports the second measurement result based on a trigger event.

In some embodiments, sending the second measurement result to the second network device includes:
determining whether a second event is triggered; and
sending the second measurement result triggered to the second network device.

In some embodiments, determining whether the second event is triggered includes at least one of:
the second measurement result indicating that the fourth terminal is located at an edge region of the second cell;
the second measurement result indicating that a beam direction of the fourth terminal is pointed toward the first cell;
the second measurement result indicating that a measurement value of the second cell is less than or equal to a third threshold; or
the second measurement result indicating that neighboring cell interference of the first cell is greater than or equal to a fourth threshold.

In some embodiments, if the fourth terminal performs cell measurement according to the first configuration or the second configuration, the fourth terminal may also receive a fourth configuration from the network device. The fourth configuration may be used for reporting the second measurement result. For example, the fourth configuration may include: configuration information of a reporting resource for reporting the second measurement result and/or a threshold corresponding to the event, etc. By way of example, the fourth terminal may receive the fourth configuration while receiving the first configuration or the second configuration. In some embodiments, the fourth terminal may receive the first configuration and the fourth configuration separately. In some embodiments, the fourth terminal may receive the second configuration and the fourth configuration separately.

It is worth noting: for the first configuration, the second configuration, the fourth terminal, the second measurement result, transmission of the second cell, the first terminal, the second terminal, CW transmission and/or BS reception, reference may be made to any of the foregoing embodiments, and are not repeated here.

As shown in FIG. 7, an embodiment of the present disclosure provides a resource configuration method, performed by a terminal of a second cell, the method includes:
S7101: A configuration is received.

In some embodiments, the terminal performing the method may be all terminals of the second cell.

In some embodiments, the terminal performing the method may be a third terminal of the second cell, and for the relevant description of the third terminal here, reference may be made to any of the foregoing embodiments.

In some embodiments, the terminal receives the first configuration and/or the second configuration sent by the second network device.

S7102: It is determined, according to the received configuration, not to perform first transmission at a resource location indicated by the configuration.

In some embodiments, determining, according to the received configuration, not to perform first transmission at the resource location indicated by the configuration includes at least one of:
determining, according to the first configuration, not to perform first transmission on the first resource;
determining, according to the first configuration, not to perform first transmission on the first resource and a guard interval;
determining, according to the second configuration, not to perform first transmission on the second resource; or
determining, according to the second configuration, not to perform first transmission on the second resource and a guard interval.

The first transmission includes at least one of: Uu interface transmission, CW transmission, BS reception, or SL transmission.

In some embodiments, according to the received configuration, it is determined not to perform at least one of the following transmissions at the resource location indicated by the configuration: uplink transmission, CW transmission, or SL transmission.

Since a terminal of the second cell may be very close to the first terminal, and the transmission of the terminal of the second cell has high power near the terminal, causing significant interference to the first terminal, the terminal may reduce interference to the first terminal by stopping one or more of uplink transmission, CW transmission, or SL transmission, especially uplink transmission. If only one or more of uplink transmission, CW transmission, or SL transmission are stopped, resources of the second cell may still be used for DL reception, BS reception, and/or SL reception, improving effective resource utilization of the second cell.

In some embodiments, the second configuration is a configuration of a second resource; the second resource corresponds to the first resource; and the second resource and the first resource have different reference timings.

In some embodiments, the terminal performing the method corresponding to FIG. 7 may be all terminals of the second cell or a third terminal. If the terminal performing the method shown in FIG. 7 is a third terminal, the third terminal may be part or all of the fourth terminals in the embodiment corresponding to FIG. 6.

In some embodiments, a terminal of the second cell may not need to receive the first configuration and/or the second configuration from the second network device, but may receive a control instruction from the second network device and directly control its own first transmission according to the control instruction. For example, according to the control instruction, the first transmission is not performed at least on the first resource or the second resource.

When a terminal acts as a reader, it supports data transmission with an ambient IoT within its DL bandwidth or UL bandwidth on the Uu interface. In a co-channel scenario, there is an issue of interference from DL transmission and UL transmission of a neighboring cell to the BS reception of the terminal. The DL transmission and UL transmission of the neighboring cell are Uu interface transmission of the neighboring cell. The terminal acting as the reader is the first terminal. The DL bandwidth may be used for DL transmission. The UL bandwidth may be used for UL transmission.

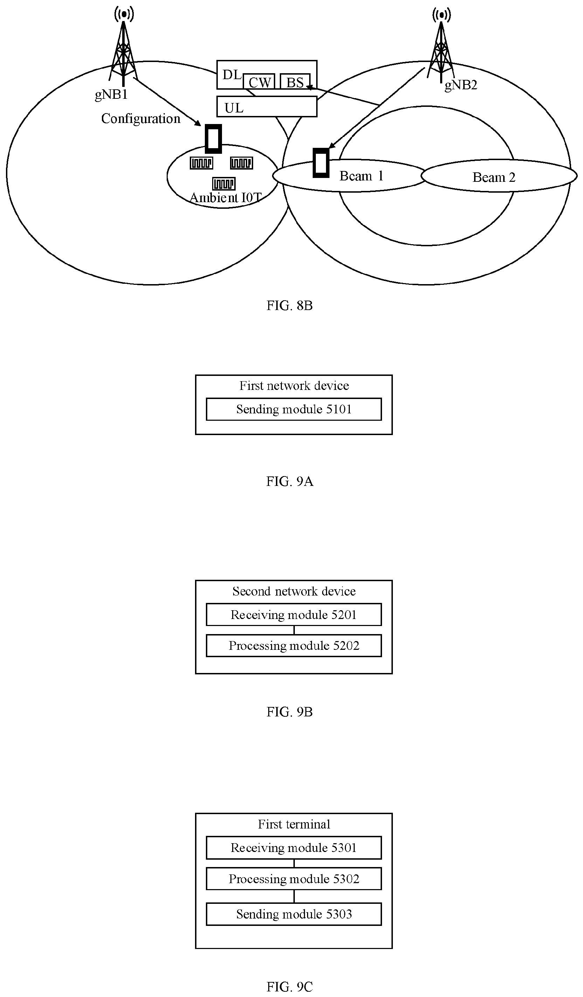

As shown in FIG. 8A, uplink transmission of a terminal of a cell corresponding to gNB2 interferes with BS reception and/or CW transmission of a terminal in a cell corresponding to gNB1. As shown in FIG. 8B, downlink reception of a terminal of the cell corresponding to gNB2 interferes with the BS reception and/or CW transmission of the terminal in the cell corresponding to gNB1.

Embodiments of the present disclosure address how to avoid the interference from neighboring cell DL transmission and UL transmission to terminal BS reception in a co-channel scenario when a terminal acts as a reader and supports data transmission with an ambient IoT within its DL bandwidth or UL bandwidth on the Uu interface, enabling efficient communication between the terminals and between the terminal and a tag, and improving data transmission and reception reliability.

When gNB1 configures a terminal to become a reader, there are the following manners:
Manner 1: gNB1 notifies gNB2 of configuration information of a periodic window. The configuration information may include time domain information and/or frequency domain information.

For example, BWP configuration information for the terminal reader. The configuration parameters of the periodic window include but are not limited to at least one of: period, offset, duration.

The reference timing of the periodic window may be based on a certain cell of gNB1 or a certain cell of gNB2.

gNB1 may also notify reference timing information while notifying the periodic window (also called interval).

For example, cell 1 of gNB1, or cell 2 of gNB2, etc., and the cell ID where the terminal reader is located.

If the timing reference is cell 1 of gNB2, gNB2 also needs to obtain the timing offset between the cell where the terminal reader is located and cell 21 of gNB2.

The configuration information of the periodic window may be configured per cell, i.e., associated with a certain cell in gNB1.

If no terminal becomes a reader, gNB1 may notify gNB2 to deconfigure the configuration information of the periodic window.

Manner 2: Based on the configuration information of the periodic window configured in option 1, it may be indicated by gNB dynamically whether to activate the periodic window, or it may be activated once configured.

Manner 3: When a terminal is configured as a reader, gNB1 configures measurement reporting for the terminal, such as an A2 event or an event similar to the A2 event. If the terminal detects that a measurement result is below a configured threshold, it triggers an uplink measurement report or uplink signaling carrying the measurement result. The uplink measurement report or uplink signaling is used to notify the network side that the measurement result is below the configured threshold. gNB1 notifies gNB2 of the configuration information of the periodic window. gNB1 notifies gNB2 to activate the configuration information of the periodic window.

Upon receiving the configuration or activation indication from gNB1, gNB2 may perform at least one of the following operations:

### Manner 1: gNB2 configures the periodic window for all terminals.

The periodic window configured by gNB2 for all terminals or associated serving cells and/or associated BWP or frequency domain range information.

The periodic window may be the periodic window configured by gNB1, or a periodic window revised by gNB2. For example, based on different reference timings, gNB2 revises the periodic window configured by gNB1 based on the timing offset between the two base stations. Thus, the terminal uses the DL timing of the current serving cell or a designated cell as the reference timing.

### Manner 2: gNB2 configures measurement reporting for the terminal.

For example, a terminal of gNB2 performs measurement reporting based on an A2 event or an event similar to the A2 event.

If the terminal detects that a measurement result is below a configured threshold, it triggers an uplink measurement report or uplink signaling. The uplink measurement report or uplink signaling is used to notify the network side that the measurement result is below the configured threshold, or that a corresponding event is triggered. Only then does gNB2 configure the periodic window for the terminal. The periodic window configured by gNB2 for the terminal or associated serving cells and/or associated BWP or frequency domain range information.

After receiving the uplink measurement report or uplink signaling, gNB2 activates a pre-configured periodic window. Based on the threshold configuration, the terminal may, for example, use the periodic window configured by gNB1 as the periodic window, or a periodic window revised by gNB2.

For example, based on different reference timings, gNB2 may modify the time domain offset of the interval so that the terminal of gNB2 that receives the periodic window configuration uses the DL timing of the current serving cell or a designated cell as the reference timing.

If the threshold of the periodic window cell or a certain designated beam is below a configured threshold, the terminal autonomously deactivates the associated periodic window.

### Manner 3: gNB2 configures a recommended beam and/or RSRP threshold for the terminal.

When the measurement result of some or all of the recommended beams is above the threshold, it indicates that the terminal performing CW transmission and/or BS reception in cell 1 is within the coverage of the recommended beam. Then, the terminal autonomously activates the associated periodic window. The terminal reports entering or leaving the beam coverage to the network side, and the network side configures or de-configures, activates or deactivates the periodic window. The periodic window may be the periodic window configured by gNB1, or a periodic window revised by gNB2. For example, based on different reference timings, gNB2 may modify the offset of the interval so that the terminal of gNB2 that receives the periodic window configuration uses the DL timing of the current serving cell or a designated cell as the reference timing.

Manner 4: Only when the conditions in option 2 and option 3 are simultaneously satisfied, the network side is triggered to configure or activate the periodic window, or the terminal autonomously activates the periodic window based on threshold comparison.

In some embodiments, for an interval configured for a terminal in gNB2, the terminal considers resources corresponding to Semi-Persistent Scheduling (SPS) and/or Configured Grant (CG) to be invalid during the interval. That is, the terminal does not perform at least one of uplink transmission, downlink reception, CW transmission, BS reception, or SL transmission within the SPS resources and CG resources during that interval.

In summary, base stations exchange periodic interval configuration information, and a neighboring base station configures the interval for a UE. Base stations exchange periodic interval configuration information, and a neighboring base station configures or de-configures the interval based on measurement reporting. Base stations exchange periodic interval configuration information, and a UE of a neighboring base station autonomously activates or deactivates the interval based on threshold comparison.

Embodiments of the present disclosure address how to avoid the interference from neighboring cell DL transmission and UL transmission to terminal BS reception in a co-channel scenario when a terminal acts as a reader and supports data transmission with an ambient IoT within its DL bandwidth or UL bandwidth on the Uu interface, enabling efficient communication between the terminals and between the terminal and a tag, and improving data transmission and reception reliability.

In embodiments of the present disclosure, part or all of the steps and their optional implementations may be arbitrarily combined with part or all of the steps in other embodiments, and may also be arbitrarily combined with optional implementations of other embodiments.

In embodiments of the present disclosure, part or all of the steps and their optional implementations may be arbitrarily combined with part or all of the steps in other embodiments, and may also be arbitrarily combined with optional implementations of other embodiments.

Embodiments of the present disclosure also provide an apparatus for implementing any of the above methods. For example, an apparatus is provided, which includes units or modules for executing the steps executed by the terminal in any of the above methods. For another example, another apparatus is provided, which includes units or modules for executing the steps executed by a network device (e.g., an access network device, or a core network device, etc.) in any of the above methods.

It should be understood that the division of units or modules in the above apparatus is only a logical function division, and may be fully or partially integrated into a physical entity in actual implementation, or may be physically separated. In addition, the units or modules in the apparatus may be implemented in the form of a processor calling software: for example, the apparatus includes a processor, the processor is connected to a memory, and the memory stores instructions. The processor calls the instructions stored in the memory to implement any of the above methods or to implement the functions of the units or modules of the above apparatus. The processor is, for example, a general-purpose processor, such as a Central Processing Unit (CPU) or a microprocessor, and the memory is a memory within the apparatus or a memory external to the apparatus. Alternatively, the units or modules in the apparatus may be implemented in the form of hardware circuits. The functions of part or all of the units or modules may be implemented by designing the hardware circuit. The hardware circuit may be understood as one or more processors. For example, in an implementation, the hardware circuit is an Application-Specific Integrated Circuit (ASIC). By designing the logical relationships of the circuit components, the functions of part or all of the above units or modules are implemented. For another example, in another implementation, the hardware circuit may be implemented by a Programmable Logic Device (PLD), such as a Field Programmable Gate Array (FPGA). The FPGA may include a large number of logic gate circuits, and the connection relationships between the logic gate circuits are configured by a configuration file, implementing the functions of part or all of the above units or modules. All units or modules of the above apparatus may be implemented entirely in the form of a processor calling software, or entirely in the form of hardware circuits, or partially in the form of a processor calling software and the remaining part in the form of hardware circuits.

In embodiments of the present disclosure, a processor is a circuit with signal processing capabilities. In an implementation, the processor may be a circuit with instruction reading and execution capabilities, such as a Central Processing Unit (CPU), a microprocessor, a Graphics Processing Unit (GPU) (which may be understood as a type of microprocessor), or a Digital Signal Processor (DSP). In another implementation, the processor may implement certain functions through the logical relationships of a hardware circuit. The logical relationships of the hardware circuit are fixed or reconfigurable. For example, the processor is a hardware circuit implemented by an Application-Specific Integrated Circuit (ASIC) or a Programmable Logic Device (PLD), such as an FPGA. In a reconfigurable hardware circuit, the process of the processor loading a configuration file to configure the hardware circuit may be understood as the process of the processor loading instructions to implement the functions of part or all of the above units or modules. Furthermore, it may also be a hardware circuit designed for artificial intelligence, which may be understood as an ASIC, such as a Neural Network Processing Unit (NPU), a Tensor Processing Unit (TPU), a Deep Learning Processing Unit (DPU), etc.

As shown in FIG. 9A, an embodiment of the present disclosure provides a first network device, in which the first network device includes:
a sending module 5101 configured to send a first configuration for a first resource to a second network device, in which the first configuration for the first resource is at least used for the second network device to control transmission of a second cell, and the first resource is used for a first terminal in a first cell of the first network device to perform continuous wave (CW) transmission to and/or backscatter (BS) reception from a second terminal.

In some embodiments, the first network device may further include: a processing module and/or a receiving module.

In some embodiments, the processing module may be used for the first network device to perform steps related to information processing in any resource configuration method.

In some embodiments, the sending module and/or the receiving module may correspond to a network interface and/or a transceiver antenna of the first network device.

In some embodiments, the sending module may be used for the first network device to perform steps related to information sending in any resource configuration method.

In some embodiments, the receiving module may be used for the first network device to perform steps related to information reception in any resource configuration method.

In some embodiments, the receiving module is configured to receive a first measurement result sent by the first terminal; and the first measurement result indicates at least one of a location of the first terminal, a beam direction of the first terminal, or interference of the second cell suffered by the first terminal; and
the sending module is configured to send indication information to the second network device according to the first measurement result; the indication information is at least used for the second network device to determine a third terminal not performing first transmission on the first resource; the third terminal camps on the second cell; the first transmission includes at least one of: Uu interface transmission, CW transmission, or BS reception; and/or the indication information is used for the second network device to determine whether to activate controlling, according to the first configuration, the transmission of the second cell.

In some embodiments, the sending module is configured to, before sending the first configuration for the first resource to the second network device, send the first configuration for the first resource to the second network device according to the first measurement result.

In some embodiments, the indication information includes: first information; and the first information indicates at least one of the location of the first terminal, the beam direction of the first terminal, or the interference of the second cell suffered by the first terminal.

In some embodiments, in a case where the first measurement result is received after sending the first configuration for the first resource to the second network device, the indication information includes: second information; and the second information at least indicates whether the second network device activates controlling, according to the first configuration, the transmission of the second cell.

In some embodiments, the receiving module is configured to receive the first measurement result sent by the first terminal before sending the first configuration for the first resource to the second network device; and the first measurement result indicates at least one of the location of the first terminal, the beam direction of the first terminal, or interference of the second cell suffered by the first terminal; and
the sending module is configured to send the first configuration for the first resource to the second network device according to the first measurement result.

In some embodiments, the sending module is configured to perform at least one of:
sending the first configuration to the second network device in a case where the first measurement result indicates that the first terminal is located at an edge region of the first cell;
sending the first configuration to the second network device in a case where the first measurement result indicates that a beam direction used by the first terminal is pointed toward the second cell; or
sending the first configuration to the second network device in a case where the first measurement result indicates that the first terminal suffers interference from the second cell.

In some embodiments, the sending module sends the first information to the second network device; the first information indicates at least one of the location of the first terminal, the beam direction of the first terminal, or the interference of the second cell suffered by the first terminal; the first information is used for the second network device to determine a third terminal not performing first transmission on the first resource; the third terminal camps on the second cell; and the first transmission includes at least one of: Uu interface transmission, CW transmission, or BS reception.

In some embodiments, the receiving module is configured to receive the first measurement result sent by the first terminal after sending the first configuration for the first resource to the second network device; the first measurement result is used to indicate at least one of the location of the first terminal, the beam direction of the first terminal, or the interference of the second cell suffered by the first terminal.

In some embodiments, the sending module is configured to send second information to the second network device according to the first measurement result; and the second information at least indicates whether the second network device activates controlling, according to the first configuration, the transmission of the second cell.

In some embodiments, the second information includes at least one of:
a first instruction at least indicating whether the second network device activates controlling, according to the first configuration, the transmission of the second cell; or
third information indicating at least one of the location of the first terminal, the beam direction of the first terminal, or the interference of the second cell suffered by the first terminal.

In some embodiments, the first configuration includes at least one of:
time domain information indicating a time location of the first resource;
reference timing information indicating a reference timing of the first resource;
frequency domain information indicating a frequency location of the first resource;
cell information indicating a cell corresponding to the first resource; or
validity period information indicating a validity period of the first resource.

In some embodiments, the time domain information includes at least one of:
period information indicating a period of the first resource;
an offset indicating a time offset of a time domain start position of an initial first resource relative to a reception time of configuration information; or
duration information indicating a duration of one first resource.

In some embodiments, the frequency domain information includes at least one of:
bandwidth part (BWP) information indicating a BWP in which the first resource is located;
frequency band information indicating a frequency band in which the first resource is located;
frequency layer information indicating a frequency layer in which the first resource is located; or
carrier information indicating a carrier on which the first resource is located.

In some embodiments, the cell in which the first resource is located includes at least one of:
a primary cell;
a primary secondary cell;
a special cell, the special cell including a primary cell and a primary secondary cell; or
a secondary cell different from the primary secondary cell.

In some embodiments, the reference timing information includes at least one of:
first timing information indicating that the reference timing is a timing of the first cell associated with the first network device;
second timing information indicating that the reference timing is a timing of the second cell associated with the second network device; or
third timing information indicating a timing offset between the first cell and the second cell.

As shown in FIG. 9B, an embodiment of the present disclosure provides a second network device, in which the network device includes:
a receiving module 5201 configured to receive a first configuration for a first resource sent by a first network device; in which the first resource is used for a first terminal in a first cell of the first network device to perform continuous wave (CW) transmission to and/or backscatter (BS) reception from a second terminal; and
a processing module 5202 configured to control transmission of a second cell of the second network device according to the first configuration.

In some embodiments, the second network device may further include: a sending module.

In some embodiments, the processing module may be configured to perform any step related to information processing in a resource configuration method performed by a network device.

In some embodiments, the sending module and/or the receiving module may correspond to a network interface and/or a transceiver antenna of the second network device.

In some embodiments, the processing module is configured to control transmission of a third terminal according to the first configuration.

In some embodiments, the processing module is configured to perform at least one of:
sending a second configuration to the third terminal according to the first configuration, in which the second configuration is a configuration of a second resource, the third terminal does not perform first transmission on the second resource, the second resource is determined according to the first resource, and the second resource and the first resource have different reference timings; or
sending the first configuration to the third terminal, in which the first configuration is used for the third terminal not to perform first transmission on the first resource,
in which the first transmission includes at least one of Uu interface transmission, CW transmission, or BS reception.

In some embodiments, the processing module is configured to control the third terminal not to perform first transmission on the first resource according to the first configuration; or control the third terminal not to perform first transmission on the first resource and a guard interval according to the first configuration, in which the guard interval includes a frequency domain interval and/or a time domain interval; and the first transmission includes at least one of: Uu interface transmission, CW transmission, or BS reception.

In some embodiments, the receiving module is configured to receive first information sent by the first network device; the first information indicates a location of the first terminal and/or a beam interfering with the first terminal; the first information is used for the second network device to determine a third terminal not performing first transmission on the first resource; and the first transmission includes at least one of: Uu interface transmission, CW transmission, or BS reception.

In some embodiments, the receiving module is configured to receive second information sent by the second network device; the second information at least indicates whether the second network device activates controlling, according to the first configuration, the transmission of the second cell.

In some embodiments, the second information includes at least:
a first instruction at least indicating whether the second network device activates controlling, according to the first configuration, the transmission of the second cell; or
third information indicating at least one of the location of the first terminal, the beam direction of the first terminal, or the interference of the second cell suffered by the first terminal.

In some embodiments, the receiving module is further configured to receive a second measurement result of a fourth terminal; the second measurement result indicates at least one of a location of the fourth terminal, a beam direction of the fourth terminal, or interference of the first cell suffered by the fourth terminal; and
the processing module is further configured to determine the third terminal from the fourth terminal according to the second measurement result.

In some embodiments, the third terminal includes at least one of:
a terminal located at an edge region of the second cell; the second cell being associated with the second network device;
a terminal having a beam direction pointed toward the first terminal; or
a terminal having neighboring cell interference greater than a first threshold.

In some embodiments, controlling the transmission of the second cell of the second network device according to the first configuration includes: in a case where the reference timing of the first configuration is a timing of the first network device, determining, according to the first configuration, time domain information of the first resource when the first resource uses a timing of the second network device.

As shown in FIG. 9C, an embodiment of the present disclosure provides a first terminal, including:
a receiving module 5301 configured to obtain a first measurement result by performing cell measurement according to a first configuration; a first resource indicated by the first configuration being used for the first terminal to perform continuous wave (CW) transmission to and/or backscatter (BS) reception from a second terminal;
a processing module 5302 configured to obtain the first measurement result by performing cell measurement; and
a sending module 5303 configured to send the first measurement result to a first network device of the first cell; the first measurement result indicating at least one of a location of the first terminal, a beam direction of the first terminal, or interference of a second cell suffered by the first terminal; and the first measurement result being used for a second network device to control transmission of the second cell according to the first configuration. In some embodiments, the first terminal may further include: a receiving module.

In some embodiments, the sending module and/or the receiving module may correspond to a network interface and/or a transceiver antenna of the first terminal.

In some embodiments, the sending module may be used for the first terminal to perform steps related to information sending in any resource configuration method.

In some embodiments, the receiving module may be used for the first terminal to perform steps related to information reception in any resource configuration method.

In some embodiments, the processing module is configured to perform at least one of:
obtaining the first measurement result by performing measurement of the first cell; or
obtaining the first measurement result by performing measurement of the second cell,
in which the first cell is associated with the first network device.
In some embodiments, the sending module is configured to determine whether a first event is triggered; and send the first measurement result triggered to the first network device.

In some embodiments, the processing module is configured to perform at least one of:
the first measurement result indicating that the first terminal is located at an edge region of the first cell;
the first measurement result indicating that the beam direction of the first terminal is pointed toward a direction of the second cell;
the first measurement result indicating that a measurement value of the first cell is less than or equal to a second threshold; or
the first measurement result indicating that neighboring cell interference of the second cell is greater than or equal to a third threshold.

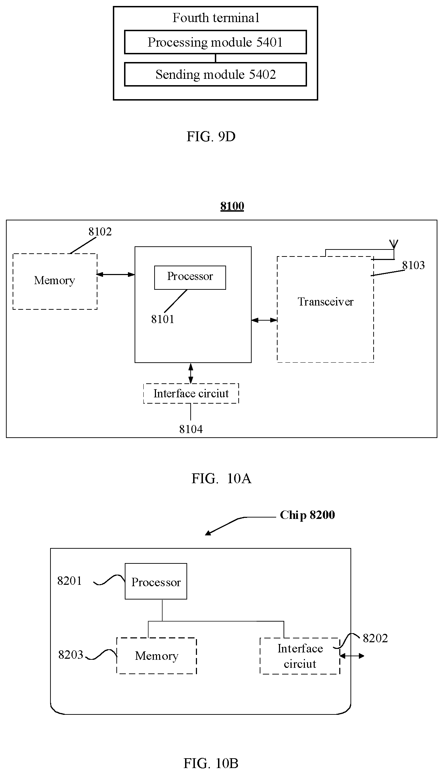

As shown in FIG. 9D, an embodiment of the present disclosure provides a fourth terminal, including:
a processing module 5401 configured to obtain a second measurement result by performing cell measurement; and
a sending module 5402 configured to send the second measurement result to a second network device of a second cell; the second measurement result being used for the second network device to control transmission of the second cell according to a first configuration; the first configuration being a configuration for a first resource sent by a first network device to the second network device; the first resource being used for a first terminal in a first cell of the first network device to perform continuous wave (CW) transmission to and/or backscatter (BS) reception from a second terminal. In some embodiments, the first terminal may further include: a sending module.

In some embodiments, the sending module and/or the receiving module may correspond to a network interface and/or a transceiver antenna of the fourth terminal.

In some embodiments, the sending module may be used for the fourth terminal to perform steps related to information sending in any resource configuration method.

In some embodiments, the receiving module may be used for the fourth terminal to perform steps related to information reception in any resource configuration method.

In some embodiments, the processing module is configured to perform at least one of:
obtaining the first measurement result by performing measurement of the first cell; or
obtaining the first measurement result by performing measurement of the second cell,
in which the first cell is associated with the first network device.

In some embodiments, the processing module is configured to determine whether a second event is triggered; and
the sending module is configured to send the second measurement result triggered to the second network device.

In some embodiments, the processing module is configured to perform at least one of:
the second measurement result indicating that the fourth terminal is located at an edge region of the second cell;
the second measurement result indicating that the beam direction of the fourth terminal is pointed toward the first cell;
the second measurement result indicating that a measurement value of the second cell is less than or equal to a third threshold; or
the second measurement result indicating that neighboring cell interference of the first cell is greater than or equal to a fourth threshold.

Embodiments of the present disclosure also provide a communication device. The communication device may include: one or more processors; in which the one or more processors are configured to invoke instructions to cause the communication device to perform the resource configuration method achievable in any of the foregoing embodiments.

In some embodiments, as shown in FIG. 10A and/or FIG. 10B, the communication device 8100 further includes one or more memories 8102 for storing instructions. Optionally, all or part of the memories 8102 may also be located outside the communication device 8100.

The communication device may be the terminal or network device. In some embodiments, the network device may be a primary node and/or a secondary node.

In some embodiments, the communication device 8100 further includes one or more transceivers 8103. When the communication device 8100 includes one or more transceivers 8103, communication steps such as sending and receiving in the above methods are executed by the transceiver 8103, and other steps are executed by the processor 8101.

In some embodiments, the transceiver may include a receiver and a transmitter, which may be separate or integrated together. Optionally, terms such as transceiver, transceiver unit, transceiver machine, transceiver circuit may be interchangeable, terms such as transmitter, transmitting unit, transmitting machine, transmitting circuit may be interchangeable, and terms such as receiver, receiving unit, receiving machine, receiving circuit may be interchangeable.

Optionally, the communication device 8100 further includes one or more interface circuits 8104. The interface circuits 8104 are connected to the memory 8102. The interface circuits 8104 may be used to receive signals from the memory 8102 or other devices, and may be used to send signals to the memory 8102 or other devices. For example, the interface circuits 8104 may read instructions stored in the memory 8102 and send the instructions to the processor 8101.

The communication device 8100 in the above embodiments may be a network device or a terminal, but the scope of the communication device 8100 in the present disclosure is not limited to this, and the structure of the communication device 8100 may not be limited by FIG. 10A. The communication device may be an independent device or may be part of a larger device. For example, the communication device may be: (1) an independent Integrated Circuit (IC), or a chip, or a chip system or subsystem; (2) a set of one or more ICs, optionally, the set of ICs may also include a storage component for storing data and programs; (3) an ASIC, such as a modem; (4) a module that may be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others, etc.

FIG. 10B is a schematic structural diagram of a chip 8200 according to an embodiment of the present disclosure. For the case where the communication device 8100 may be a chip or a chip system, reference may be made to the schematic block diagram of the chip 8200 shown in FIG. 10B, but is not limited to this.

The chip 8200 includes one or more processors 8201, and the processor 8201 is configured to invoke instructions to cause the chip 8200 to execute any of the above resource configuration methods.

In some embodiments, the chip 8200 further includes one or more interface circuits 8202. The interface circuits 8202 are connected to a memory 8203. The interface circuit 8202 may be used to receive signals from the memory 8203 or other devices, and may be used to send signals to the memory 8203 or other devices. For example, the interface circuits 8202 may read instructions stored in the memory 8203 and send the instructions to the processor 8201. Optionally, terms such as interface circuit, interface, transceiver pin, transceiver may be interchangeable.

In some embodiments, the chip 8200 further includes one or more memories 8203 for storing instructions. Optionally, all or part of the memories 8203 may be located outside the chip 8200.

The present disclosure also provides a storage medium, on which instructions are stored. When the instructions are executed on the communication device 8100, the communication device 8100 is caused to execute any of the above methods. Optionally, the storage medium is an electronic storage medium. Optionally, the storage medium is a computer-readable storage medium, but may also be a storage medium readable by other devices. Optionally, the storage medium may be a non-transitory storage medium, but may also be a transitory storage medium.

The present disclosure also provides a program product. When the program product is executed by the communication device 8100, the communication device 8100 is caused to execute any of the above resource configuration methods. Optionally, the program product is a computer program product.

The present disclosure also provides a computer program. When the computer program is executed on a computer, the computer is caused to execute any of the above resource configuration methods.

Those skilled in the art will readily appreciate other embodiments of the present disclosure after considering the specification and practicing the invention disclosed here. This disclosure is intended to cover any variations, uses, or adaptations of embodiments of the present disclosure, which follow the general principles of embodiments of the present disclosure and include common knowledge or conventional technical means in the technical field not disclosed by the present disclosure. The specification and embodiments are to be regarded as illustrative only, with the true scope and spirit of embodiments of the present disclosure being indicated by the following claims.

It should be understood that embodiments of the present disclosure are not limited to the precise structures described above and illustrated in the accompanying drawings, and various modifications and changes may be made without departing from the scope thereof. The scope of embodiments of the present disclosure is limited only by the appended claims.

## Claims

1. A resource configuration method, performed by a first network device, comprising:
sending a first configuration for a first resource to a second network device, wherein the first configuration for the first resource is at least used for the second network device to control transmission of a second cell, and the first resource is used for a first terminal in a first cell of the first network device to perform continuous wave (CW) transmission to and/or backscatter (BS) reception from a second terminal.

2. The method according to claim 1, further comprising:
receiving a first measurement result sent by the first terminal, wherein the first measurement result indicates at least one of a location of the first terminal, a beam direction of the first terminal, or interference of the second cell suffered by the first terminal; and
sending indication information to the second network device according to the first measurement result, wherein the indication information is at least used for the second network device to determine a third terminal not performing first transmission on the first resource, the third terminal camps on the second cell, and the first transmission comprises at least one of Uu interface transmission, CW transmission, or BS reception; and/or the indication information is used for the second network device to determine whether to activate controlling, according to the first configuration, the transmission of the second cell according to the first configuration.

3. The method according to claim 2, wherein sending the first configuration for the first resource to the second network device comprises:
before sending the first configuration for the first resource to the second network device, sending the first configuration for the first resource to the second network device according to the first measurement result.

4. The method according to claim 3, wherein sending the first configuration for the first resource to the second network device according to the first measurement result comprises at least one of:
sending the first configuration to the second network device in a case where the first measurement result indicates that the first terminal is located at an edge region of the first cell;
sending the first configuration to the second network device in a case where the first measurement result indicates that a beam direction used by the first terminal is pointed toward the second cell; or
sending the first configuration to the second network device in a case where the first measurement result indicates that the first terminal suffers interference from the second cell.

5. The method according to claim 3 or 4, wherein the indication information comprises first information; and the first information indicates at least one of the location of the first terminal, the beam direction of the first terminal, or the interference of the second cell suffered by the first terminal.

6. The method according to claim 1, wherein in a case where the first measurement result is received after sending the first configuration for the first resource to the second network device, the indication information comprises second information, and the second information at least indicates whether the second network device activates controlling, according to the first configuration, the transmission of the second cell.

7. The method according to claim 6, wherein the second information comprises at least one of:
a first instruction at least indicating whether the second network device activates controlling, according to the first configuration, the transmission of the second cell; or
third information indicating at least one of the location of the first terminal, the beam direction of the first terminal, or the interference of the second cell suffered by the first terminal.

8. The method according to any one of claims 1 to 7, wherein the first configuration comprises at least one of:
time domain information indicating a time location of the first resource;
reference timing information indicating a reference timing of the first resource;
frequency domain information indicating a frequency location of the first resource;
cell information indicating a cell corresponding to the first resource; or
validity period information indicating a validity period of the first resource.

9. The method according to claim 8, wherein the time domain information comprises at least one of:
period information indicating a period of the first resource;
an offset indicating a time offset of a time domain start position of an initial first resource relative to a reception time of configuration information; or
duration information indicating a duration of one first resource.

10. The method according to claim 8, wherein the frequency domain information comprises at least one of:
bandwidth part (BWP) information indicating a BWP in which the first resource is located;
frequency band information indicating a frequency band in which the first resource is located;
frequency layer information indicating a frequency layer in which the first resource is located; or
carrier information indicating a carrier on which the first resource is located.

11. The method according to claim 8, wherein a cell in which the first resource is located comprises at least one of:
a primary cell;
a primary secondary cell;
a special cell, the special cell comprising a primary cell and a primary secondary cell; or
a secondary cell different from the primary secondary cell.

12. The method according to claim 8, wherein the reference timing information comprises at least one of:
first timing information indicating that the reference timing is a timing of the first cell associated with the first network device;
second timing information indicating that the reference timing is a timing of the second cell associated with the second network device; or
third timing information indicating a timing offset between the first cell and the second cell.

13. A resource configuration method, performed by a second network device, comprising:
receiving a first configuration for a first resource sent by a first network device, wherein the first resource is used for a first terminal in a first cell of the first network device to perform continuous wave (CW) transmission to and/or backscatter (BS) reception from a second terminal; and
controlling transmission of a second cell of the second network device according to the first configuration.

14. The method according to claim 13, wherein controlling the transmission of the second cell of the second network device according to the first configuration comprises:
determining a third terminal that interferes with CW transmission and/or BS reception of the first terminal; and
controlling transmission of the third terminal according to the first configuration.

15. The method according to claim 14, wherein controlling the transmission of the third terminal according to the first configuration comprises one of:
sending a second configuration to the third terminal according to the first configuration, wherein the second configuration is a configuration of a second resource, the third terminal does not perform first transmission on the second resource, the second resource is determined according to the first resource, and the second resource and the first resource have different reference timings; or
sending the first configuration to the third terminal, wherein the first configuration is used for the third terminal not to perform first transmission on the first resource,
wherein the first transmission comprises at least one of Uu interface transmission, CW transmission, or BS reception.

16. The method according to claim 14 or 15, wherein controlling the transmission of the third terminal according to the first configuration comprises at least one of:
controlling, according to the first configuration, the third terminal not to perform first transmission on the first resource; or
controlling, according to the first configuration, the third terminal not to perform the first transmission on the first resource and a guard interval,
wherein the guard interval comprises a frequency domain interval and/or a time domain interval; and
the first transmission comprises at least one of Uu interface transmission, CW transmission, or BS reception.

17. The method according to any one of claims 13 to 16, further comprising:
receiving indication information sent by the first network device, wherein the indication information is sent by the first network device according to a first measurement result of the first terminal, and is at least used for the second network device to determine a third terminal not performing first transmission on the first resource, the third terminal camps on the second cell, and the first transmission comprises at least one of Uu interface transmission, CW transmission, or BS reception; and/or the indication information is used for the second network device to determine whether to activate controlling, according to the first configuration, the transmission of the second cell.

18. The method according to claim 17, wherein the indication information comprises first information; and the first information indicates at least one of a location of the first terminal, a beam direction of the first terminal, or interference of the second cell suffered by the first terminal.

19. The method according to any one of claims 13 to 17, wherein the indication information comprises second information; and the second information comprises at least one of:
a first instruction at least indicating whether the second network device activates controlling, according to the first configuration, the transmission of the second cell; or
third information indicating at least one of a location of the first terminal, a beam direction of the first terminal, or interference of the second cell suffered by the first terminal.

20. The method according to any one of claims 13 to 19, further comprising:
receiving a second measurement result of a fourth terminal, wherein the second measurement result indicates at least one of a location of the fourth terminal, a beam direction of the fourth terminal, or interference of the first cell suffered by the fourth terminal; and
determining the third terminal from the fourth terminal according to the second measurement result.

21. The method according to claim 20, wherein the third terminal comprises at least one of:
a terminal located at an edge region of the second cell, the second cell being associated with the second network device;
a terminal having a beam direction pointed toward the first terminal; or
a terminal having neighboring cell interference greater than a first threshold.

22. The method according to any one of claims 13 to 21, wherein controlling the transmission of the second cell of the second network device according to the first configuration comprises:
in a case where a reference timing of the first configuration is a timing of the first network device, determining, according to the first configuration, time domain information of the first resource when the first resource uses a timing of the second network device.

23. A resource configuration method, performed by a first terminal, the first terminal being located in a first cell, comprising:
obtaining a first measurement result by performing cell measurement according to a first configuration, wherein a first resource indicated by the first configuration is used for the first terminal to perform continuous wave (CW) transmission to and/or backscatter (BS) reception from a second terminal; and
sending the first measurement result to a first network device of the first cell, wherein the first measurement result indicates at least one of a location of the first terminal, a beam direction of the first terminal, or interference of a second cell suffered by the first terminal; and the first measurement result is used for a second network device to control transmission of the second cell according to the first configuration.

24. The method according to claim 23, wherein obtaining the first measurement result by performing the cell measurement comprises at least one of:
obtaining the first measurement result by performing measurement of the first cell; or
obtaining the first measurement result by performing measurement of the second cell,
wherein the first cell is associated with the first network device.

25. The method according to claim 24, wherein sending the first measurement result to the first network device comprises:
determining whether a first event is triggered; and
sending the first measurement result triggered to the first network device.

26. The method according to claim 25, wherein determining whether the first event is triggered comprises at least one of:
the first measurement result indicating that the first terminal is located at an edge region of the first cell;
the first measurement result indicating that the beam direction of the first terminal is pointed toward the second cell;
the first measurement result indicating that a measurement value of the first cell is less than or equal to a second threshold; or
the first measurement result indicating that neighboring cell interference of the second cell is greater than or equal to a third threshold.

27. A resource configuration method, performed by a fourth terminal, the fourth terminal being located in a second cell, comprising:
obtaining a second measurement result by performing cell measurement; and
sending the second measurement result to a second network device of the second cell, wherein the second measurement result is used for the second network device to control transmission of the second cell according to a first configuration, the first configuration is a configuration for a first resource sent by a first network device to the second network device, and the first resource is used for a first terminal in a first cell of the first network device to perform continuous wave (CW) transmission to and/or backscatter (BS) reception from a second terminal.

28. The method according to claim 27, wherein obtaining the second measurement result by performing the cell measurement comprises:
obtaining the second measurement result by performing measurement of the first cell and/or the second cell, wherein the first cell is associated with the first network device.

29. The method according to claim 28, wherein sending the second measurement result to the second network device of the second cell comprises:
determining whether a second event is triggered; and
sending the second measurement result triggered to the second network device.

30. The method according to claim 29, wherein determining whether the second event is triggered comprises at least one of:
the second measurement result indicating that the fourth terminal is located at an edge region of the second cell;
the second measurement result indicating that a beam direction of the fourth terminal is pointed toward the first cell;
the second measurement result indicating that a measurement value of the second cell is less than or equal to a third threshold; and
the second measurement result indicating that neighboring cell interference of the first cell is greater than or equal to a fourth threshold.

31. The method according to any one of claims 27 to 30, further comprising:
receiving the first configuration sent by the second network device; and
determining not to perform first transmission on the first resource according to the first configuration, wherein the first transmission comprises at least one of Uu interface transmission, CW transmission, or BS reception.

32. The method according to any one of claims 27 to 30, further comprising:
receiving a second configuration sent by the second network device, wherein the second configuration is a configuration of a second resource, the second resource corresponds to the first resource, and the second resource and the first resource have different reference timings; and
determining not to perform first transmission on the second resource, wherein the first transmission comprises at least one of Uu interface transmission, CW transmission, or BS reception.

33. A first network device, comprising:
a sending module configured to send a first configuration for a first resource to a second network device, wherein the first configuration for the first resource is at least used for the second network device to control transmission of a second cell, and the first resource is used for a first terminal in a first cell of the first network device to perform continuous wave (CW) transmission to and/or backscatter (BS) reception from a second terminal.

34. A second network device, comprising:
a receiving module configured to receive a first configuration for a first resource sent by a first network device, wherein the first resource is used for a first terminal in a first cell of the first network device to perform continuous wave (CW) transmission to and/or backscatter (BS) reception from a second terminal; and
a processing module configured to control transmission of a second cell of the second network device according to the first configuration.

35. A first terminal, the first terminal being located in a first cell, comprising:
a processing module configured to obtain a first measurement result by performing cell measurement according to a first configuration, wherein a first resource indicated by the first configuration is used for the first terminal to perform continuous wave (CW) transmission to and/or backscatter (BS) reception from a second terminal; and
a sending module configured to send the first measurement result to a first network device of the first cell, wherein the first measurement result indicates at least one of a location of the first terminal, a beam direction of the first terminal, or interference of a second cell suffered by the first terminal, and the first measurement result is used for a second network device to control transmission of the second cell according to the first configuration.

36. A fourth terminal, the fourth terminal being located in a second cell, comprising:
a processing module configured to obtain a second measurement result by performing cell measurement; and
a sending module configured to send the second measurement result to a second network device of the second cell, wherein the second measurement result is used for the second network device to control transmission of the second cell according to a first configuration, the first configuration is a configuration for a first resource sent by a first network device to the second network device, the first resource is used for a first terminal in a first cell of the first network device to perform continuous wave (CW) transmission to and/or backscatter (BS) reception from a second terminal.

37. A communication device, comprising:
one or more processors;
wherein the one or more processors are configured to invoke instructions to cause the communication device to perform the method according to any one of claims 1 to 12, 13 to 22, 23 to 26, and/or 27 to 32.

38. A storage medium, storing instructions that, when executed on a communication device, cause the communication device to perform the method according to any one of claims 1 to 12, 13 to 22, 23 to 26, and/or 27 to 32.
